# EUROPÄISCHE PATENTSCHRIFT

(11) **EP 3 516 740 B1**
(45) Veröffentlichungstag und Bekanntmachung des Hinweises auf die Patenterteilung: **27.05.2026**
(21) Anmeldenummer: 17793869.3
(22) Anmeldetag: 18.10.2017
(51) Int. Cl.: H01R 27/00, H01R 13/11, B25F 5/02, H01R 13/26

(54) **ANSCHLUSSVORRICHTUNG EINES ELEKTROGERÄTS ODER EINES ENERGIESPEICHERS**
CONNECTION APPARATUS OF AN ELECTRICAL DEVICE OR OF A STORED ENERGY SOURCE
DISPOSITIF DE CONNEXION D'UN APPAREIL ÉLECTRIQUE OU D'UN ACCUMULATEUR D'ÉNERGIE

(30) Priorität: 25.10.2016 DE 102016120329
(43) Veröffentlichungstag der Anmeldung: 31.07.2019
(73) Patentinhaber: Festool GmbH, 73240 Wendlingen (DE)
(72) Erfinder: MAIER, Peter, 73235 Weilheim an der Teck (DE); SCHMID, Markus, 73240 Wendlingen (DE)
(74) Vertreter: Patentanwälte Bregenzer und Reule Partnerschaftsgesellschaft mbB
(86) Internationale Anmeldenummer: PCT/EP2017/076555
(87) Internationale Veröffentlichungsnummer: WO 2018/077683

(56) Entgegenhaltungen:
- EP-A1- 2 822 103
- EP-A1- 2 822 103
- EP-A1- 2 996 174
- EP-A1- 2 996 174
- EP-A1- 3 059 781
- EP-A1- 3 059 781
- EP-A2- 2 628 428
- EP-A2- 2 628 428
- DE-A1- 102010 041 765
- DE-U1- 20 023 631
- DE-U1- 20 023 631
- DE-U1- 20 023 631
- US-A1- 2016 293 909

## Beschreibung

Die Erfindung betrifft eine erste Komponente mit einer ersten Anschlussvorrichtung, wobei die erste Anschlussvorrichtung an eine zweite Anschlussvorrichtung einer zweiten Komponente anschließbar ist, wobei die erste Komponente ein Energiespeicher und die zweite Komponente ein einen elektrischen Antriebsmotor aufweisendes Elektrogerät, insbesondere eine Werkzeugmaschine oder ein Sauggerät ist, oder wobei die erste Komponente ein einen elektrischen Antriebsmotor aufweisendes Elektrogerät, insbesondere eine Werkzeugmaschine oder ein Sauggerät ist, und die zweite Komponente ein Energiespeicher ist, gemäß dem Oberbegriff des Anspruchs 1.

Eine erste Komponente mit einer ersten Anschlussvorrichtung dieser Art ist beispielsweise in US 2016/0293909 A1 und in DE 200 23 631 U1 erläutert.

Es ist üblich, dass Energiespeicher, zum Beispiel Akkupacks, anhand von elektrischen Anschlusskontaktanordnungen mit Werkzeugmaschinen, beispielsweise Hand-Werkzeugmaschinen, oder Sauggeräten verbindbar sind. Über die elektrischen Kontakte der Anschlusskontaktanordnungen fließen Versorgungsströme vom Energiespeicher zum Elektrogerät, sodass dessen Antriebsmotor betreibbar ist. Die elektrischen Kontakte sind für die hierfür erforderlichen Ströme entsprechend dimensioniert.

Allerdings steigt der Strombedarf der Elektrogeräte mit Antriebsmotor in zunehmendem Maße. Für höhere Leistungen eines Elektrogeräts und einen dementsprechend große Ströme bereitstellenden Energiespeicher sind die Anforderungen an die Anschlusskontaktanordnungen hoch.

Es ist daher die Aufgabe der vorliegenden Erfindung, eine Anschlussvorrichtung für ein Elektrogerät oder einen Energiespeicher oder beides der eingangs genannten Art bereitzustellen, die verbesserte elektrische Eigenschaften aufweist.

Zur Lösung der Aufgabe ist eine erste Komponente mit einer ersten Anschlussvorrichtung gemäß der technischen Lehre des Anspruchs 1 vorgesehen.

Ein Grundgedanke der Erfindung ist also darauf gerichtet, dass die Anschlussvorrichtung einen neuen Typ von Anschlussvorrichtung darstellt, einen sogenannten ersten Typ, der bei Kombination der erfindungsgemäßen Anschlussvorrichtung mit einer gleichartigen Anschlussvorrichtung dieses ersten Typs mindestens eine elektrische Zusatzkontakt-Verbindung zwischen den Anschlussvorrichtungen über das Zusatzkontaktelement und das komplementäre Zusatzgegenkontaktelement ermöglicht. Ohne weiteres können selbstverständlich mehrere Zusatzkontaktelemente und Zusatzgegenkontaktelemente pro elektrischem Potential vorgesehen sein, was die effektiv vorhandene Kontaktfläche zwischen den Anschlussvorrichtungen bezüglich des jeweiligen Potentials erhöht. Somit können größere Ströme zwischen Energiespeicher und Elektrogerät übertragen werden. Auch das Basiskontaktelement und/oder das Basisgegenkontaktelement können ein einzelnes Bauteil sein oder auch mehrere Kontaktelemente oder Kontaktelement-Abschnitte umfassen. Prinzipiell möglich ist also, dass eine Anschlussvorrichtung der Erfindung mindestens ein Basiskontaktelement pro Potential oder zwei oder weitere Basiskontaktelementen pro Potential aufweist, das Gegenstück dazu, die andere Anschlussvorrichtung des ersten Typs oder des zweiten Typs, hat dann dementsprechend vorteilhaft ebenfalls mindestens ein Basisgegenkontaktelement, vorzugsweise weitere Basisgegenkontaktelemente.

Die Anschlussvorrichtung gemäß der Erfindung ist aber auch kompatibel mit sozusagen älteren oder konventionellen Anschlussvorrichtungen, nämlich Anschlussvorrichtungen eines zweiten Typs. Bei diesen ist lediglich das Basisgegenkontaktelement vorhanden, d. h. dass das mindestens eine Zusatzkontaktelement sozusagen ins Leere läuft, nämlich beispielsweise frei in einer Aufnahmekavität der anderen Anschlussvorrichtung (des zweiten Typs) steht, also elektrisch keinen Strom übertragen kann oder an einer Isolationsfläche dieser anderen Anschlussvorrichtung des zweiten Typs anliegt, also auch keine elektrische Funktion erfüllt.

Durch das Zusatzkontaktelement und Zusatzgegenkontaktelement sind zusätzliche Kontaktflächen vorhanden, die beispielsweise den Übergangswiderstand zwischen dem Energiespeicher und dem Elektrogerät verringern. Die zusätzlichen Kontaktflächen verbessern die elektrische Verbindung auch beispielsweise im Falle von Vibrationen. Es können höhere Dauerströme übertragen werden. Zudem kann beispielsweise auch die Anzahl von Steckzyklen, d. h. die Möglichkeit die Anschlussvorrichtungen aneinander zu stecken, vergrößert werden.

Das Elektrogerät ist beispielsweise eine Werkzeugmaschine, insbesondere eine Hand-Werkzeugmaschine. Beispielsweise handelt es sich bei dem Elektrogerät um ein Schraubgerät, ein Sägegerät, ein Trenngerät, einen Fräser, eine Klebemaschine oder dergleichen. Der Elektromotor treibt beispielsweise direkt oder über ein Getriebe eine Werkzeugaufnahme an. Der Elektromotor kann aber auch zum Vortrieb der Werkzeugmaschine relativ zu einem Werkstück und/oder zum Bereitstellen eines Bearbeitungsmaterials, zum Beispiel eines Umleimers, dienen, insbesondere im Falle einer Klebemaschine. Beim Sauggerät treibt der Elektromotor beispielweise eine Saugturbine an oder bildet einen Bestandteil einer Saugturbine oder eines Saugaggregats. Das Elektrogerät kann auch eine halbstationäre, d. h. beispielsweise auf eine Baustelle mitnehmbare, Werkzeugmaschine sein, beispielsweise eine Tischkreissäge, Kappsäge, Zugsäge, Zug-Kapp-Säge oder dergleichen.

Beispielsweise ist an einem Fuß oder einer sonstigen Stelle eines Gehäuses des Elektrogeräts eine Energiespeicher-Schnittstelle, insbesondere eine Akkuschnittstelle, für den Energiespeicher vorgesehen.

Bei dem Energiespeicher handelt es sich beispielsweise um einen sogenannten Akkupack. Der Energiespeicher ist vorzugsweise wieder aufladbar. Es ist aber auch möglich, dass der Energiespeicher beispielsweise eine Brennstoffzelle oder dergleichen andere Quelle elektrische Energie umfasst oder aufweist.

Bevorzugt umfasst die Erfindung oder betrifft die Erfindung ein System, welches mindestens zwei Anschlussvorrichtungen aufweist, von denen eine eine Anschlussvorrichtung des ersten Typs und die andere Anschlussvorrichtung eine Anschlussvorrichtung ebenfalls des ersten Typs oder des zweiten Typs bildet. Die eine Anschlussvorrichtung bildet einen Bestandteil des Elektrogeräts, die andere Anschlussvorrichtung ein Bestandteil des Energiespeichers. Das System kann auch weitere Anschlussvorrichtungen umfassen, d. h. dass passend zu der Anschlussvorrichtung des ersten Typs zwei Anschlussvorrichtungen vorgesehen sind, von denen eine Anschlussvorrichtung eine Anschlussvorrichtung des ersten Typs und die andere Anschlussvorrichtung eine Anschlussvorrichtung des zweiten Typs ist.

Gemäß der Erfindung sind das Basiskontaktelement und das Zusatzkontaktelement, die demselben elektrischen Potential zugeordnet sind, elektrisch miteinander verbunden. Gemäß der Erfindung sind das Zusatzgegenkontaktelement und das Basisgegenkontaktelement, die zum selben elektrischen Potential gehören, elektrisch miteinander verbunden.

Ein Basiskontaktelement und mindestens ein Zusatzkontaktelement bilden zweckmäßigerweise eine Gruppe von Kontaktelementen, die ein und demselben elektrischen Potential zugeordnet sind, beispielsweise dem Massepotential oder einem Versorgungspotential, insbesondere 12 V oder 18 V Gleichspannung. Es können weitere Basiskontaktelemente und/oder Zusatzkontaktelemente zu dieser Gruppe gehören. Weiterhin ist es möglich, dass bei einer Anschlussvorrichtung einer, beispielsweise ersten, Art zwei oder mehr Basiskontaktelemente eine Gruppe von Kontaktelementen bilden, die demselben elektrischen Potential zugeordnet sind und kein Zusatzkontaktelement vorhanden ist, während bei einer Anschlussvorrichtung einer anderen, beispielsweise zweiten, Art die Gruppe von dem gleichen elektrischen Potential zugeordneten Kontaktelementen mindestens ein Basiskontaktelement sowie mindestens ein Zusatzkontaktelement umfasst.

Ein Basisgegenkontaktelement und mindestens ein Zusatzgegenkontaktelement bilden vorteilhaft eine Gruppe von Kontaktelementen, die demselben elektrischen Potential zugeordnet sind, beispielsweise dem Massepotential oder einem Versorgungspotential, insbesondere 12 V oder 18 V Gleichspannung oder auch 48 V Gleichspannung. Es können weitere Basisgegenkontaktelemente und/oder Zusatzgegenkontaktelemente zu dieser Gruppe gehören. Es ist auch möglich, dass bei einer Anschlussvorrichtung einer, beispielsweise ersten, Art zwei oder mehr Basisgegenkontaktelemente eine Gruppe von Kontaktelementen bilden, die demselben elektrischen Potential zugeordnet sind und kein Zusatzgegenkontaktelement vorhanden ist, während bei einer Anschlussvorrichtung einer anderen, beispielsweise zweiten, Art die Gruppe von dem gleichen elektrischen Potential zugeordneten Kontaktelementen mindestens ein Basisgegenkontaktelement sowie mindestens ein Zusatzgegenkontaktelement umfasst.

Erfindungsgemäß ist vorgesehen, dass die jeweils demselben Potential zugeordneten Basiskontaktelemente oder Basisgegenkontaktelemente gegenüber dem jeweils anderen elektrischen Potential in einer elektrisch isolierenden Aufnahme, beispielsweise einer Steckaufnahme oder einem Steckvorsprung, an dem ebenfalls eine Steckaufnahme vorgesehen sein kann, aufgenommen sind.

In einer jeweiligen elektrisch isolierenden Aufnahme sind erfindungsgemäß nicht nur das jeweilige Basiskontaktelement oder das Basisgegenkontaktelement, sondern auch das jeweils zugeordnete Zusatzkontaktelement bzw. Zusatzgegenkontaktelement aufgenommen. Somit ist also vorgesehen, dass in einer Aufnahme beispielsweise ein Basiskontaktelement und ein Zusatzkontaktelement oder ein Basisgegenkontaktelement und ein Zusatzgegenkontaktelement angeordnet sind. Das Basiskontaktelement und Zusatzkontaktelement oder das Basisgegenkontaktelement und Zusatzgegenkontaktelement sind also elektrisch isoliert gegenüber anderen Kontaktelementen eingehaust.

Gemäß der Erfindung ist vorgesehen, dass im aneinandergesteckten Zustand der Anschlussvorrichtungen an einem elektrischen Potential, beispielsweise einem Massepotential oder Versorgungspotential, zugeordnetes Basiskontaktelement und ein Basisgegenkontaktelement in einer jeweiligen elektrisch isolierenden Aufnahme isoliert von Kontaktelementen anderer elektrischer Potentiale angeordnet ist. Wenn also beispielsweise weitere Basiskontaktelemente und Basisgegenkontaktelemente für andere Potentiale vorhanden sind, sind diese nicht in derselben Aufnahme angeordnet, wie die vorgenannten Basiskontaktelemente, nämlich das Basiskontaktelement und das Basisgegenkontaktelement.

Gemäß der Erfindung ist vorgesehen, dass im aneinandergesteckten Zustand der Anschlussvorrichtungen in dieser elektrisch isolierenden Aufnahme nicht nur das Basiskontaktelement und das Basisgegenkontaktelement angeordnet und zweckmäßigerweise in Kontakt miteinander sind, sondern auch eines oder mehrere der Zusatzkontaktelemente und/oder Zusatzgegenkontaktelemente. Somit sind also einem einzigen Potential zugeordnete Kontaktelemente isoliert von anderen Kontaktelementen, die anderen Potentialen zugeordnet sind, in der elektrisch isolierenden Aufnahme, beispielsweise einer Steckaufnahme, angeordnet.

Erfindungsgemäß ist vorgesehen, dass das Basiskontaktelement oder das Basisgegenkontaktelement oder beide in einem Abstand zu einem Innenumfang der elektrisch isolierenden Aufnahme angeordnet sind. Der Innenumfang erstreckt sich beispielsweise als Mantelfläche um eine Steckachse, entlang derer die Kontaktelemente aneinander ansteckbar sind. Das Zusatzkontaktelement und/oder das Zusatzgegenkontaktelement sind hingegen vorzugsweise am Innenumfang der elektrisch isolierenden Aufnahme angeordnet. Beispielsweise bildet das Zusatzkontaktelement oder das Zusatzgegenkontaktelement einen Teil der Innenumfangswand oder einer Innenumfangswand der elektrisch isolierenden Aufnahme. Das jeweils andere Zusatzkontaktelement oder Zusatzgegenkontaktelement hingegen ist vorzugsweise als Federkontakt ausgebildet, der dann an der Umfangswand, die das Zusatzkontaktelement oder Zusatzgegenkontaktelement bildet oder aufweist, entlang gleiten kann.

Gemäß der Erfindung ist vorgesehen, dass, beispielsweise bei der Anschlussvorrichtung des Energiespeichers, eine Steckaufnahme angeordnet oder vorgesehen ist, in der mindestens ein Basisgegenkontaktelement und mindestens ein Zusatzgegenkontaktelement angeordnet sind. Zwischen dem mindestens einen Basiskontaktelement und dem mindestens einen Zusatzgegenkontaktelement ist ein Abstand, beispielsweise quer zu einer Steckachse, entlang derer die Anschlussvorrichtungen aneinander ansteckbar sind, zur Aufnahme zumindest eines Abschnitts eines elektrisch isolierenden Steckvorsprungs der jeweils anderen Anschlussvorrichtung vorhanden. In dem Steckvorsprung oder an dem Steckvorsprung ist beispielsweise das oder ein Basiskontaktelement und/oder ein Zusatzgegenkontaktelement vorgesehen. Insbesondere weist der Steckvorsprung eine Aufnahme auf, in der das Basiskontaktelement der anderen Anschlussvorrichtung aufgenommen ist.

Vorteilhaft ist vorgesehen, dass ein jeweiliges Basiskontaktelement oder ein jeweiliges Basisgegenkontaktelement zentral in einer Steckaufnahme oder einem Steckvorsprung der jeweiligen Anschlussvorrichtung aufgenommen ist. Zentral ist in diesem Fall beispielsweise zentral quer zu einer Steckachse. Quer zur Steckachse sind also vorzugsweise zwischen dem jeweiligen Basiskontaktelement oder Basisgegenkontaktelement und einem Außenumfang einer jeweiligen Steckaufnahme oder einem Steckvorsprung etwa gleiche Abstände vorhanden.

Die Anschlussvorrichtungen sind vorteilhaft entlang einer Steckachse oder Steckbahn aneinander ansteckbar. Die Steckachse oder Steckbahn ist vorzugsweise geradlinig, wobei auch eine gekrümmte Steckbahn prinzipiell denkbar ist.

Vorzugsweise ist vorgesehen, dass die Anschlussvorrichtungen anhand einer Rasteinrichtung und/oder eine Klemmeinrichtung und/oder einer Verriegelungseinrichtung aneinander fixierbar sind. So kann die Verrastung beispielsweise ein Entfernen der Anschlussvorrichtungen und somit ein Entfernen des Energiespeichers vom Elektrogerät längs der Steckachse oder Steckbahn blockieren. Eine Verriegelung kann beispielsweise durch eine quer zur Steckbahn oder Steckachse wirkende Raste geleistet werden. Die Klemmeinrichtung, Rasteinrichtung oder Verriegelungseinrichtung ist zweckmäßigerweise durch ein Betätigungselement in Richtung einer Lösestellung betätigbar, in der das Elektrogerät und der Energiespeicher voneinander trennbar sind und/oder die Anschlussvorrichtungen relativ zueinander beweglich sind.

Bei der Ausgestaltung der Kontaktelemente bzw. deren Kontaktflächen sind viele Varianten möglich.

So kann beispielsweise für das Basiskontaktelement, das Basisgegenkontaktelement, das Zusatzkontaktelement oder das Zusatzgegenkontaktelement folgendes vorgesehen sein:
Das jeweilige Kontaktelement kann beispielsweise einen Federkontakt und/oder ein Federkontaktelement und/oder eine Kontaktzunge und/oder einander gegenüberliegende Kontaktelemente, insbesondere Messerkontakte, zum zangenartigen Umgreifen einer feststehenden Messer-Kontaktfläche umfassen oder dadurch gebildet sein.

Vorzugsweise kann das jeweilige Kontaktelement aber auch eine feststehende Kontaktfläche und/oder eine von einander gegenüberliegenden Gegenkontakten zangenartig umgreifbare Kontaktfläche, insbesondere eine Messer-Kontaktfläche oder eine Messer-Kontakt-Zunge, umfassen oder dadurch gebildet sein.

Die Messer-Kontaktfläche greift beispielsweise zwischen die einander gegenüberliegenden Kontaktelemente ein, wenn die Anschlussvorrichtungen aneinander angesteckt werden.

Bevorzugt ist es, wenn eines von Basiskontaktelement und Basisgegenkontaktelement oder von Zusatzkontaktelement und Zusatzgegenkontaktelement eine feststehende Kontaktfläche umfasst, während das jeweils andere ein federndes Kontaktelement umfasst oder dadurch gebildet ist. Prinzipiell ist es also möglich, dass beispielsweise das Basiskontaktelement eine feststehende Kontaktfläche ist oder eine solche umfasst, während das Basisgegenkontaktelement ein federndes Bauteil oder ein federndes Kontaktelement ist. Auch die andere Variante ist möglich, bei der das Basiskontaktelement ein Federkontakt ist, welcher federnd nachgiebig an dem Gegenstück dazu, nämlich dem Basisgegenkontaktelement in der Fixierstellung anliegt.

Weiterhin vorteilhaft ist es, wenn das federnde Kontaktelement quer zu der Steckachse oder Steckbahn federnd nachgiebig ist. Insbesondere vorteilhaft ist es, wenn das federnde Kontaktelement einen Kontaktvorsprung aufweist, der sich quer zu der Steckachse oder Steckbahn erstreckt.

Wenn mehrere Kontaktelemente, beispielsweise Basiskontaktelemente und Zusatzkontaktelemente, einen Kontaktvorsprung aufweisen oder bilden, ist es vorteilhaft, wenn mindestens zwei Kontaktvorsprünge, vorzugsweise alle Kontaktvorsprünge, etwa dieselbe Längspositionen bezüglich der Steckachse oder Steckbahn haben.

Die feststehende Kontaktfläche erstreckt sich vorzugsweise parallel oder im Wesentlichen parallel zu der Steckachse oder Steckbahn. Somit ist es zum Beispiel möglich, dass das federnde Kontaktelement entlang der Steckbahn oder Steckachse an der oder einer feststehenden Kontaktfläche entlang schleift, wenn die Anschlussvorrichtungen und somit der Energiespeicher an das Elektrogerät aneinandergesteckt werden.

An dieser Stelle sei bemerkt, dass ein federndes Kontaktelement nicht nur mit einer feststehenden Kontaktfläche in Kontakt gelangen kann, sondern dass auch das komplementäre Kontaktelement, sozusagen das Gegen-Kontaktelement, ein federndes Kontaktelement sein kann.

Zweckmäßigerweise ist vorgesehen, dass sämtliche, insbesondere sämtliche feststehende und/oder sämtliche federnde, Kontaktelemente etwa dieselbe Längserstreckung bezüglich der Steckachse oder Steckbahn, entlang derer die Anschlussvorrichtungen aneinander ansteckbar sind, aufweisen, sodass sie im Wesentlichen gleichzeitig oder simultan in Eingriff und/oder in Kontakt mit den komplementären oder als Gegenstück dienenden festen Kontaktflächen oder federnden Kontaktelementen gelangen.

Vorteilhaft ist vorgesehen, dass die Kontaktelemente mindestens einer Anschlussvorrichtung mindestens ein Paar einander gegenüberliegender Kontaktelemente aufweist, die quer zu einer Steckrichtung, entlang derer die Kontaktelemente an die jeweils anderen Kontaktelementen der anderen Anschlussvorrichtung ansteckbar oder einsteckbar sind, in einander zugewandter Richtung oder in voneinander abgewandter Richtung federnd oder federbelastet sind. So können ein Paar einander gegenüberliegender Kontaktelemente, beispielsweise ein Paar aus zwei Basiskontaktelementen oder zwei Zusatzkontaktelementen oder ein Paar aus einem Basiskontaktelementen und einem Zusatzkontaktelement vorgesehen sein, die zangenartig einander zugewandt federbelastet oder federnd sind, wobei zwischen die federnden oder federbelasteten Kontaktelemente dieser beispielsweise ersten Anschlussvorrichtung mindestens ein Kontaktelement der anderen, beispielsweise zweiten, Anschlussvorrichtung, beispielsweise ein Basisgegenkontaktelement und/oder ein Zusatzgegenkontaktelement steckbar ist. Es ist aber auch möglich, dass die Kontaktelemente der einen, beispielsweise ersten, Anschlussvorrichtung quer zur Steckrichtung oder Steckachse voneinander abgewandt federnd sind, sodass sie beispielsweise zwischen einander gegenüberliegende Flächen, z.B. Isolierflächen und/oder Kontaktelemente, der anderen, beispielweise zweiten, Anschlussvorrichtung steckbar sind und zum Beispiel von innen und/oder spreizfußartig, an den Flächen, also den Isolierflächen oder Kontaktelementen, der zweiten Anschlussvorrichtung federnd anliegen.

Vorteilhaft ist es, wenn die Anschlussvorrichtung im Innenraum einer Steckaufnahme oder eines Steckvorsprungs der Steckkonturen oder der Gegen-Steckkonturen angeordnete, einander zugewandt federnde oder federbelastete Kontaktelemente als Basiskontaktelemente oder Basisgegenkontaktelemente aufweist und zusätzlich als Zusatzkontaktelement oder Zusatzgegenkontaktelement mindestens ein federndes oder federbelastetes Kontaktelement, welches in einer Richtung von diesen beiden Kontaktelementen abgewandt federnd oder federbelastet ist. Selbstverständlich können zwei oder weitere derartiger Zusatzkontaktelemente oder Zusatzgegenkontaktelemente vorgesehen sein. Die beiden einander zugewandt federnden Kontaktelemente sind beispielsweise zur zangenartigen Kontaktierung eines Gegen-Kontaktelements der anderen Anschlussvorrichtung vorgesehen, während im aneinandergesteckten Zustand der Anschlussvorrichtungen das mindestens eine davon abgewandt federnde oder federnd belastete Zusatzkontaktelement oder Zusatzgegenkontaktelement beispielsweise an einer Innenwand einer Steckaufnahme der anderen Anschlussvorrichtung anliegt oder in die Aufnahmekavität eingreift. Die Innenwand kann die Isolationsfläche sein oder als Zusatzkontaktelement oder Zusatzgegenkontaktelement ausgestaltet sein.

Ganz allgemein ist es vorteilhaft, wenn mindestens ein Kontaktelement, beispielsweise das Basiskontaktelement oder Basisgegenkontaktelement oder das Zusatzkontaktelement oder das Zusatzgegenkontaktelement, eine Einführschräge zum Aufgleiten auf das jeweils andere Kontaktelement aufweist. Die Einführschräge verläuft zweckmäßigerweise schräg bezüglich der Steckachse oder Steckbahn. Die Einführschräge ist vorzugsweise an einem federnden Kontaktelement vorgesehen. Die Einführschräge kann aber auch an einer feststehenden Kontaktfläche eines jeweiligen Kontaktelements vorgesehen sein.

Weiterhin hat vorzugsweise mindestens ein Kontaktelement einen Kontaktvorsprung, der quer zu der Steckachse oder Steckbahn zum jeweils anderen Kontaktelement vorsteht. Der Kontaktvorsprung ist zweckmäßigerweise V-förmig, U-förmig oder dergleichen. Insbesondere ist der Kontaktvorsprung zweckmäßigerweise gerundet oder weist einen gekrümmten Verlauf auf.

Vorteilhaft ist vorgesehen, dass ein Steckvorsprung oder eine Steckaufnahme einer Anschlussvorrichtung des ersten Typs, der oder die mindestens ein Basiskontaktelement und ein Zusatzkontaktelement, vorzugsweise mindestens zwei Zusatzkontaktelemente umfasst, quer zur Steckachse oder Steckbahn konturgleich mit einem Steckvorsprung oder einer Steckaufnahme einer Anschlussvorrichtung des zweiten Typs ist, der oder die kein Zusatzkontaktelement (oder Zusatzgegenkontaktelement) aufweist. Dadurch ist eine hohe Kompatibilität geschaffen.

Weiterhin ist es vorteilhaft, wenn eines von Basiskontaktelement und Basisgegenkontaktelement oder von Zusatzkontaktelement und Zusatzgegenkontaktelement quer zu der Steckachse oder Steckbahn nebeneinander angeordnete und/oder sich längs der Steckachse erstreckende Kontaktabschnitte, beispielsweise Federkontakt-Zungen, aufweist. Bevorzugt sind die Kontaktabschnitte relativ zueinander beweglich, sodass jeder Kontaktabschnitt unabhängig vom anderen Kontaktabschnitt elektrischen Kontakt zu der jeweils komplementären Kontaktfläche aufrechterhalten kann. So können also beispielsweise längs der Steckbahn oder Steckachse zwei oder mehr Kontaktabschnitte nebeneinander angeordnet sein, die zum selben Potential gehören.

An dieser Stelle sei erwähnt, dass die obigen und die nachfolgenden Ausführungen sich selbstverständlich auf eine oder mehrere Paarungen von Basiskontaktelementen und Basisgegenkontaktelement oder Zusatzkontaktelement und Zusatzgegenkontaktelement beziehen können.

Eine vorteilhafte Ausführungsform sieht vor, dass das Basiskontaktelement oder Basisgegenkontaktelement und das mindestens eine Zusatzkontaktelement oder Zusatzgegenkontaktelement in einer Steckaufnahme angeordnet sind, wobei eines der Kontaktelemente in der Steckaufnahme freistehend angeordnet ist und das andere Kontaktelement an einer Seitenwand der Steckaufnahme angeordnet ist und/oder die Seitenwand bildet. Die Steckaufnahme ist beispielsweise als eine Steckmulde oder als ein Sackloch ausgebildet. Die Steckaufnahme hat beispielsweise einen U-förmigen oder V-förmigen Querschnitt.

So ist beispielsweise vorteilhaft, wenn beispielsweise das Basiskontaktelement oder Basisgegenkontaktelement frei in der Steckaufnahme angeordnet ist und das mindestens eine Zusatzkontaktelement oder Zusatzgegenkontaktelement an einer Seitenwand der Steckaufnahme angeordnet ist oder diese bildet.

Besonders bevorzugt ist eine Ausführungsform, bei der eines der Kontaktelemente frei in der Steckaufnahme steht und an einander entgegengesetzten Seiten oder zueinander winkeligen Seiten der Steckaufnahme jeweils ein Zusatzkontaktelement oder ein Zusatzgegenkontaktelement angeordnet ist. Auf diese Weise können eine oder mehrere Seitenwände für die zusätzlichen Kontakte bzw. Zusatzkontaktelemente genutzt werden. An dieser Stelle wird auch die Kompatibilität zu den Anschlussvorrichtungen des zweiten Typs deutlich. Bei diesem zweiten Typ können beispielsweise Steckaufnahmen vorgesehen sein, bei denen eine oder mehrere Seitenwände Isolationsflächen bereitstellen, sodass das jeweilige Zusatzkontaktelement (es können mehrere vorgesehen sein) der Anschlussvorrichtung des zweiten Typs an diesen Isolationsflächen in der Fixierstellung anliegen.

Eine sozusagen komplementäre Situation ist vorteilhaft wie folgt definiert. Zweckmäßigerweise ist vorgesehen, dass das Basiskontaktelement und das mindestens eine Zusatzkontaktelement oder das Basisgegenkontaktelement und das Zusatzgegenkontaktelement als vor eine feststehende Kontur der jeweiligen Anschlussvorrichtung vorstehende Steckkontakte ausgestaltet sind oder derartige Steckkontakte aufweisen. Die Steckkontakte greifen beispielsweise in die vorher erläuterte Steckaufnahme ein. Beispielsweise können die Basiskontaktelemente oder Basisgegenkontaktelemente, mit denen die Steckkontakte in Eingriff gelangen, Messerkontakte sein, also beispielsweise eine feststehende Kontaktfläche bereitstellen. Ein als Messerkontakt ausgestaltetes Basiskontaktelement oder Basisgegenkontaktelement kann beispielsweise zwischen federnde Steckkontakte eingreifen, die dementsprechend von einander entgegengesetzten Seiten her in Kontakt mit dem Messerkontakt sind.

Vorzugsweise ist sozusagen zur Bildung der Basiskontakte (Basiskontaktelement und/oder Basisgegenkontaktelement) eine Messerkontakt-Schnittstelle durch das mindestens eine Basiskontaktelemente und das mindestens eine Basisgegenkontaktelement bereitgestellt. Diese Schnittstelle ist sowohl bei den Anschlussvorrichtungen des ersten Typs als auch des zweiten Typs vorhanden. Zusätzlich befindet sich neben den Messkontakten an mindestens einer Seite, zweckmäßigerweise an einander entgegengesetzten Seiten der Messerkontakte-Schnittstelle bzw. den Basiskontaktelementen und Basisgegenkontaktelementen, mindestens eine Kombination oder Paarung bestehend aus Zusatzkontaktelement und Zusatzgegenkontaktelement.

Beispielsweise steht das Basiskontaktelement oder Basisgegenkontaktelement in der Art einer Kontaktzunge in die Steckaufnahme vor und/oder ist in der Steckaufnahme im Abstand zu Seitenflächen der Steckaufnahme, insbesondere mittig, angeordnet. Parallel zu der Kontaktzunge angeordnet ist in diesem Fall mindestens ein Zusatzkontaktelement oder Zusatzgegenkontaktelement, beispielsweise an einer Seitenwand neben der Kontaktzunge.

Bevorzugt ist, wenn das Basiskontaktelement oder das Basisgegenkontaktelement im Innenraum einer Steckaufnahme angeordnet sind und an mindestens zwei Seitenwänden der Steckaufnahme jeweils ein, insbesondere als feststehende Kontaktfläche ausgestaltetes, Zusatzkontaktelement oder Zusatzgegenkontaktelement angeordnet ist. Bei einer Anschlussvorrichtung der zweiten Art ist vorteilhaft anstelle mindestens eines dieser Zusatzkontaktelemente oder Zusatzgegenkontaktelemente eine Isolationsfläche oder eine Aufnahmekavität vorgesehen.

Vorteilhaft ist es weiterhin, wenn in einer jeweiligen Steckaufnahme ausschließlich feststehende Kontaktelemente vorgesehen sind, während die in die Steckaufnahme eingreifenden Steckkontaktelemente federnd nachgiebig sind. Allerdings kann auch ein feststehendes Kontaktelement in einem vorbestimmten Maß nachgiebig sein, beispielsweise wenn es aus Metall, insbesondere aus Kupfer, Aluminium oder dergleichen ist. Die federnden Steckkontaktelemente sind jedoch konstruktiv bereits so ausgelegt, dass sie federnd nachgiebig sind, beispielsweise durch eine entsprechende Querschnittsform oder dergleichen.

Ein vorteilhaftes Konzept sieht vor, dass eine der Anschlussvorrichtungen ausschließlich feststehende Kontaktelemente, die andere Anschlussvorrichtung ausschließlich federnde Kontaktelemente aufweist. Bevorzugt sind beim Energiespeicher feste Kontaktelemente oder Kontaktflächen für die Basiskontakte (Basiskontaktelement und/oder Basisgegenkontaktelement) und die Zusatzkontakte (Zusatzkontaktelement und/oder Zusatzgegenkontaktelement) vorgesehen, während beim Elektrogerät federnde Kontaktelemente bevorzugt sind. Ohne weiteres sind aber auch Anschlussvorrichtungen möglich, die beides aufweisen, nämlich federnde und nicht federnde bzw. feststehende Kontaktelemente. Bevorzugt ist allerdings, wenn bei einer Anschlussvorrichtung einem jeweiligen Potential nur federnde oder nur feststehende Kontaktelemente zugeordnet sind. Es kann zum Beispiel vorgesehen sein, dass beispielsweise dem einen Potential, zum Beispiel einem Massepotential, bei der einen Anschlussvorrichtung feststehende Kontaktelemente, bei der anderen Anschlussvorrichtung federnde Kontaktelemente vorgesehen sein, während bezüglich des anderen Potentials, beispielsweise einem Versorgungspotential die erstgenannte Anschlussvorrichtung federnde Kontaktelemente aufweist, während die andere, zweitgenannte Anschlussvorrichtung feststehende Kontaktelemente aufweist.

Vorteilhaft ist vorgesehen, dass die Anschlussvorrichtung nicht nur elektrische Energie zur Stromversorgung oder Energieversorgung des Elektrogeräts durch den Energiespeicher bereitstellt, sondern zusätzlich noch eine Datenschnittstelle aufweist. Insbesondere weist die Anschlussvorrichtung zweckmäßigerweise mindestens eine Daten-Kontaktanordnung zur Herstellung einer Datenverbindung zwischen dem Elektrogerät und dem Energiespeicher auf. Kontakte der Daten-Kontaktanordnung sind also von den Kontakten zur elektrischen Energieversorgung des Elektrogeräts durch den Energiespeicher separate Kontakte. An dieser Stelle sei aber erwähnt, dass selbstverständlich auch über eine Stromversorgungsschnittstelle, nämlich die Basiskontaktelemente und Basisgegenkontaktelemente sowie die Zusatzkontaktelemente und Zusatzgegenkontaktelemente Daten übertragen werden können, beispielsweise in der Art von auf den Versorgungsstrom aufmodulierten Signalen.

Die Daten-Kontaktanordnung und die zur Energieversorgung vorgesehenen Kontaktelemente, nämlich die Basiskontaktelemente sowie das mindestens eine Zusatzkontaktelement, weisen vorzugsweise in Bezug auf eine Steckachse, entlang derer die Anschlussvorrichtungen aneinander ansteckbar sind, einen Längsabstand und/oder einen Querabstand auf und/oder sind in verschiedenen Ebenen angeordnet.

In einer in Bezug auf eine zur Steckachse, entlang derer die Anschlussvorrichtungen aneinander ansteckbar sind, quer orientierten, insbesondere rechtwinkeligen, Ebene, in der die zur Energieversorgung vorgesehenen Basiskontaktelement und das mindestens eine Zusatzkontaktelement angeordnet sind, ist vorteilhaft kein Kontaktelement der Daten-Kontaktanordnung angeordnet.

Die den unterschiedlichen Potentialen zugeordneten Basiskontaktelemente, gegebenenfalls die den Basiskontaktelementen jeweils zugeordneten Zusatzkontaktelemente, sind vorteilhaft in einer Reihenrichtung, insbesondere entlang einer Gerade, quer, insbesondere rechtwinkelig, zu einer Steckachse, entlang derer die Anschlussvorrichtungen aneinander ansteckbar sind, nebeneinander angeordnet. Auch die Basisgegenkontaktelement sowie die jeweils zugeordneten Zusatzgegenkontaktelemente sind dann vorteilhaft in einer Reihenrichtung quer, insbesondere rechtwinkelig, zur Steckachse, insbesondere entlang einer Gerade, nebeneinander angeordnet.

Ein vorteilhaftes Konzept sieht eine Nachrüstbarkeit oder wahlweise Ausrüstbarkeit einer Anschlussvorrichtung mit Zusatzkontaktelementen oder Zusatzgegenkontaktelementen vor. Vorzugsweise ist vorgesehen, dass mindestens eines dieser Kontaktelemente, d. h. mindestens eines von Basiskontaktelement oder Basisgegenkontaktelement oder von Zusatzkontaktelement und Zusatzgegenkontaktelement ein an einem Grundkörper der jeweiligen Anschlussvorrichtung insbesondere wieder lösbar eingestecktes Bauteil bildet. Mithin bildet das jeweilige Kontaktelement ein Steck-Kontaktelement. An dem Grundkörper ist eine entsprechende Steckaufnahme oder Steckhalterung für das Kontaktelement vorgesehen. An der Halterung ist zweckmäßigerweise ein elektrischer Steckkontakt oder Aufnahmekontakt für das jeweilige Kontaktelement vorhanden, sodass das Kontaktelement mit dem elektrischen Potential, dem es zugeordnet ist, verbindbar ist, beispielsweise verrastbar ist. Es kann vorgesehen sein, dass das nachgerüstete Kontaktelement wieder lösbar ist, beispielsweise indem die vorgenannte Verrastung gelöst wird. Es ist aber auch möglich, dass das nachgerüstete Kontaktelement nicht vom Grundkörper der Anschlussvorrichtung entfernbar ist, beispielsweise weil die Verrastung nicht lösbar ist, weil das Kontaktelement verschweißt oder verklebt ist oder dergleichen.

Bevorzugt ist ein Gleichteilprinzip. So ist beispielsweise vorgesehen, dass mindestens eine Paarung von Basiskontaktelement und Zusatzkontaktelement baugleiche Kontaktelemente umfasst, beispielsweise Federzungen. Aber auch eine Paarung von Basisgegenkontaktelement und Zusatzgegenkontaktelement kann baugleiche Kontaktelemente vorteilhaft umfassen. Es ist aber auch möglich, dass die Basiskontaktelement und die Basisgegenkontaktelementen und/oder die Zusatzkontaktelemente und die Zusatzgegenkontaktelemente baugleiche Kontaktelemente umfassen.

Bevorzugt ist es, wenn die Kontaktelemente sozusagen stapelartig übereinander quer zu einer Steckachse, entlang derer die Anschlussvorrichtungen aneinander ansteckbar sind, angeordnet sind.

Ein zweckmäßiges Konzept sieht vor, dass mindestens eine Paarung von Basiskontaktelement und Zusatzkontaktelement und/oder eine Paarung von Basisgegenkontaktelement und Zusatzgegenkontaktelement in Bezug auf eine Steckachse, entlang derer die Anschlussvorrichtungen aneinander ansteckbar sind, keinen oder allenfalls einen geringen Abstand oder Längsabstand zueinander haben, sodass sie mit den zugeordneten Kontaktelementen der jeweils anderen Anschlussvorrichtung gleichzeitig oder zumindest im Wesentlichen gleichzeitig in elektrischen Kontakt gelangen. So sind beispielsweise das Basiskontaktelement und das Zusatzkontaktelement im Wesentlichen ohne Abstand oder Versatz bezüglich der Steckachse angeordnet, sodass sie im Wesentlichen gleichzeitig beim Anstecken der Anschlussvorrichtungen aneinander in elektrischen Kontakt mit dem zugeordneten Basisgegenkontaktelement und dem zugeordneten Zusatzgegenkontaktelement gelangen.

Zweckmäßig ist es auch, wenn die Steckkonturen und Gegen-Steckkonturen der Anschlussvorrichtungen des ersten Typs und des zweiten Typs im Wesentlichen konturgleich und/oder steck-kompatibel sind.

Vorteilhaft ist vorgesehen, dass eine Steckaufnahme oder ein Steckvorsprung einer jeweiligen Anschlussvorrichtung des ersten Typs im Wesentlichen konturgleich oder ganz konturgleich wie eine Steckaufnahme oder ein Steckvorsprung eine Anschlussvorrichtung des zweiten Typs ist.

Weiterhin ist es zweckmäßig, wenn die Anschlussvorrichtung in Bezug auf mindestens zwei Potentiale, ein Massepotential und ein davon verschiedenen Versorgungspotential, insbesondere Gleichspannungspotential, jeweils eine Paarung von Basiskontaktelement und Zusatzkontaktelement oder eine Paarung von Basisgegenkontaktelement und Zusatzgegenkontaktelement aufweist. Wenn zwei derartige Anschlussvorrichtungen aneinandergesteckt werden, gelangen für das Massepotential mindestens ein Basiskontaktelement und ein Basisgegenkontaktelement sowie ein Zusatzkontaktelement und ein Zusatzgegenkontaktelement und ebenso für das Versorgungspotential mindestens ein Basiskontaktelement und ein Basisgegenkontaktelement sowie ein Zusatzkontaktelement und ein Zusatzgegenkontaktelement in elektrischen Kontakt miteinander.

Nachfolgend werden Ausführungsbeispiele der Erfindung anhand der Zeichnung erläutert. Es zeigen:
- Figur 1: eine perspektivische Schrägansicht eines Elektrogeräts mit einer Anschlussvorrichtung eines ersten Typs, die in
- Figur 2: einer vergrößerten Detailansicht dargestellt ist,
- Figur 3: einen Energiespeicher mit einer Anschlussvorrichtungen eines ersten Typs passend zu dem Elektrogerät gemäß Figuren 1, 2 in perspektivischer Darstellung von schräg oben,
- Figur 4: ein weiteres Elektrogerät dargestellt etwa in dem Ausschnitt entsprechend Figur 2, jedoch mit einer Anschlussvorrichtung eines zweiten Typs,
- Figur 5: einen zu dem Elektrogerät gemäß Figur 4 passenden Energiespeicher mit einer Anschlussvorrichtungen eines zweiten Typs,
- Figur 6: einen Schnitt durch ein Detail der aneinander angesteckten Anschlussvorrichtungen des ersten Typs des Elektrogeräts gemäß Figur 1, 2 und des Energiespeichers gemäß Figur 3 etwa entlang einer Schnittlinie A-A in Figur 3,
- Figur 7: ein Detail D1 aus Figur 6,
- Figur 8: eine Detailansicht entsprechend dem Detail D1 in Figur 6, wobei an das Elektrogerät mit der Anschlussvorrichtung des ersten Typs gemäß Figuren 1, 2 der Energiespeicher gemäß Figur 5 mit seiner Anschlussvorrichtung des zweiten Typs angeschlossen ist,
- Figur 9: einen Schnitt durch ein Detail der aneinander angesteckten Anschlussvorrichtungen des zweiten Typs des Elektrogeräts gemäß Figur 4 und des Energiespeichers gemäß Figur 5 etwa entlang einer Schnittlinie B-B in Figur 5,
- Figur 10: ein Detail D2 aus Figur 9, und
- Figur 11: eine Detailansicht entsprechend dem Detail D2 aus Figur 9, wobei an das Elektrogerät gemäß Figur 4 mit der Anschlussvorrichtung des zweiten Typs der Energiespeicher gemäß Figur 3 mit seiner Anschlussvorrichtung des ersten Typs angeschlossen ist.

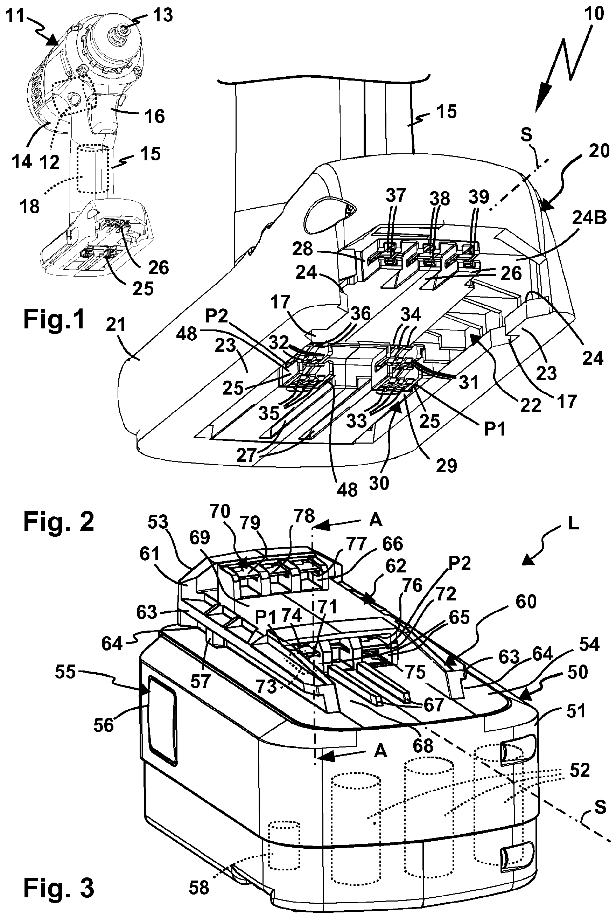

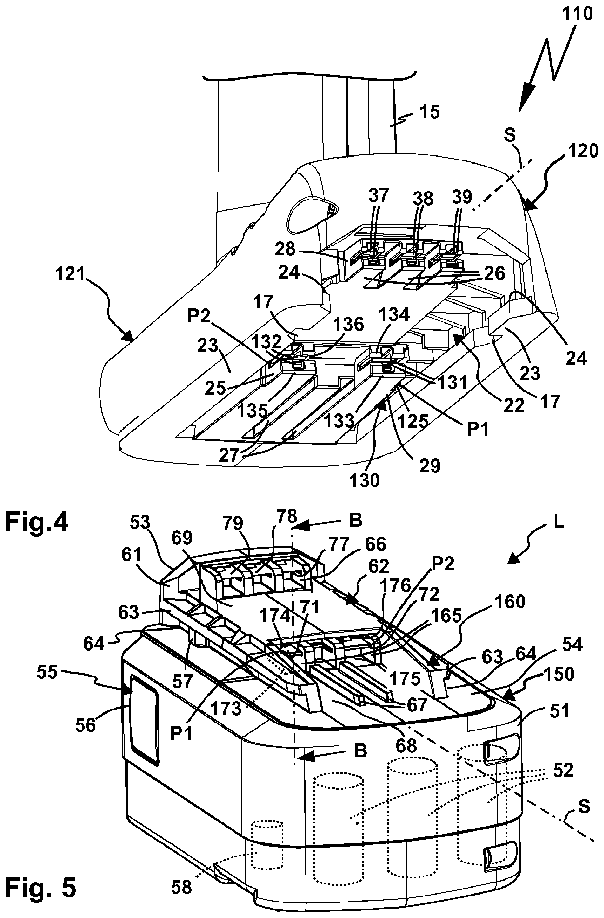

In den Figuren 1, 2 ist ein Elektrogerät 10 in Gestalt einer Handwerkzeugmaschine dargestellt, das im wesentlichen dieselben Grundkomponenten aufweist wie ein Elektrogerät 110 gemäß Figur 4, nämlich ebenfalls eine Handwerkzeugmaschine, wobei die Elektrogeräte 10, 110 unterschiedliche Energiespeicherschnittstellen 20, 120 für in den Figuren 3 und 5 dargestellte Energiespeicher 50, 150 aufweist.

In einem Gehäuse 11 des Elektrogerätes 10 befindet sich ein elektrischer Antriebsmotor 12, der direkt oder über ein Getriebe eine Werkzeugaufnahme 13 antreibt. An der Werkzeugaufnahme 13 ist ein Arbeitswerkzeug, beispielsweise ein Schrauberbit, ein Bohrer oder dergleichen anordenbar. An dieser Stelle sei bemerkt, dass die Ausgestaltung des Elektrogerätes 10 beispielsweise als Schraubgerät und/oder Bohrgerät nur ein Beispiel darstellt. Das Elektrogerät 10, 110 könnte ohne weiteres auch eine Sägemaschine, ein Trenngerät, eine Klebemaschine, eine Oberfräse oder auch ein halbstationäres Gerät, beispielsweise eine Tischkreissäge oder eine Kappsäge sein. Weiterhin ist das Konzept der Elektrogeräte 10, 110 in Verbindung mit den Energiespeichern 50, 150 auch bei Sauggeräten oder dergleichen anderen, einen Elektromotor aufweisenden Geräten ohne weiteres realisierbar.

Der Antriebsmotor 12 ist in einem Motorabschnitt 14 des Gehäuses 11 angeordnet. Vom Motorabschnitt 14 steht ein Handgriffabschnitt 15 ab, der von einem Bediener umgriffen oder ergriffen werden kann. Im Übergangsbereich zwischen Handgriffabschnitt 15 und Motorabschnitt 14 ist ein Schalter 16 zum Einschalten und/oder Ausschalten des Elektrogerätes 10, 110 vorgesehen, vorzugsweise zur Beeinflussung der Drehzahl des Antriebsmotors 12. Der Antriebsmotor 12 weist eine hohe Leistungsaufnahme auf, beispielsweise beim Schraubbetrieb. Dementsprechend fließen große Ströme vom Energiespeicher 50 oder 150 zum Elektrogerät 10, 110, was insbesondere bei der Kombination des Elektrogerätes 10 mit dem Energiespeicher 50 mit hoher Zuverlässigkeit und geringem Aufwand realisierbar ist.

Das Elektrogerät 10 und der Energiespeicher 50 stellen erfindungsgemäße Komponenten dar, die jedoch mit den sozusagen konventionellen oder bisher bekannten Komponenten, dem Gerät 110 sowie dem Energiespeicher 150 kompatibel sind. Insoweit bei den Elektrogeräten 10, 110 sowie den Energiespeichern 50, 150 gleiche oder gleichartige Bauteile, insbesondere mechanische Komponenten, vorhanden sind, sind diese mit denselben Bezugszeichen versehen und werden nur einmal erläutert. Unterschiedliche, jedoch funktional ähnliche Komponenten sind durch um "100" verschiedene Bezugszeichen nach Möglichkeit kenntlich gemacht.

An einem Grundkörper 21 der Energiespeicherschnittstelle 20, 120 ist eine Energiespeicheraufnahme 22 für den Energiespeicher 50, 150 vorgesehen. Die Energiespeicheraufnahme 22 wird seitlich von Führungsvorsprüngen 23 begrenzt, die jeweils eine Nut 24 definieren. In die Nuten 24 können Führungsvorsprünge 63 eingreifen, die an einem Halteabschnitt 62, der in die Energiespeicheraufnahme 22 eingreifen kann, eines Gehäuses 51 des Energiespeichers 50, 150 angeordnet sind. Die Nuten 64 sind zwischen einer Oberseitenwand 54 des Gehäuses 51 und den Führungsvorsprüngen 63 definiert.

Die Führungsvorsprünge 63 stehen quer zur Steckachse S nach außen hin vor, so dass sie in die Nuten 24 eingreifen können. Die Führungsvorsprünge 23 der Energiespeicherschnittstellen 20, 120 greifen in Nuten 64 des Halteabschnittes 62 ein.

Die Nuten 24, 64 sowie die Führungsvorsprünge 23, 63 erstrecken sich entlang einer Steckachse S, entlang derer der Energiespeicher 50, 150 an die Energiespeicheraufnahme 22 ansteckbar ist.

Die Energiespeicher 50, 150 können also entlang einer Steckbahn, die vorliegend geradlinig ist und somit die Steckachse S definiert, in die Energiespeicheraufnahme 22 eingesteckt werden, wobei die Führungsvorsprünge 23, 63 in die Nuten 24, 64 eingreifen. Am Ende dieser Steckbewegung schlägt ein hochstehender Abschnitt 53 des Grundkörpers 61 an einer Ausnehmung 24B des Grundkörpers 21 bzw. der Energiespeicheraufnahme 22 an, so dass die Steckbewegung endet. Zugleich rasten dann Riegel oder Rasten 57, die in den Nuten 64 angeordnet sind, in korrespondierende Riegelaufnahmen oder Rastaufnahmen 17 am Grundkörper 21 bzw. der Energiespeicherschnittstelle 20, 120 ein, so dass der Energiespeicher 50, 150 bezüglich des Gehäuses 11 des Elektrogerätes 10, 110 verriegelt ist. Er ist dann unverschieblich bezüglich der Steckachse S. Die Energiespeicher 50, 150 nehmen relativ zum Elektrogerät 10, 110 dann eine Fixierstellung F ein. In den Figuren 2 und 3 bzw. 4 und 5 ist hingegen eine Lösestellung L dargestellt.

Die Verriegelungseinrichtung 55, die man auch als eine Rasteinrichtung bezeichnen kann, ist durch mindestens eine Betätigungselement 56 (vorzugsweise sind zwei Betätigungselemente 56 vorgesehen) lösbar, wobei beispielsweise die Riegel oder Rasten 57 außer Eingriff mit den Riegelaufnahmen oder Rastaufnahmen 17 gebracht werden können. Die Riegel 57 sind vorzugsweise angefedert, so dass sie in Richtung der in den Figuren 3, 5 dargestellten Verriegelungsstellung, mithin also in die Eingriffsstellung mit den Riegelaufnahmen / Rastaufnahmen 17 federbelastet sind. Wenn die Verriegelungseinrichtung 55 in die Verriegelungsstellung verstellt ist, können die Energiespeicher 50, 150 vom Gehäuse 11 des Elektrogerätes 10, 110 durch eine Schiebebewegung entlang der Steckachse S entfernt werden.

Eine zusätzliche Führung bzw. Halterung der Gehäuse 51 am Grundkörper 21 wird vorzugsweise dadurch realisiert, dass an einer Oberseitenwand 54 des Gehäuses 51 Führungsvorsprünge 67 vorgesehen sind, die in komplementäre Führungsaufnahmen der Energiespeicheraufnahme 22 formschlüssig eingreifen. Die Führungsvorsprünge 67 sind beispielsweise Rippen.

Der Halteabschnitt 52 hat eine stufige Gestalt, wobei ausgehend von einem höheren Niveau beim Vorsprung 53 eine Ebene 68 und anschließend eine Ebene 69 definiert ist. Im Bereich der Ebene 68 sind die Führungsvorsprünge 67 vorgesehen. Korrespondierend dazu hat die Energiespeicheraufnahme 22 ebenfalls unterschiedliche Ebenen, nämlich eine der Ebene 68 zugeordnete Ebene 28, sowie eine der Ebene 69 zugeordnete Ebene 29. Zwischen den Ebenen 28, 29 bzw. 68, 69 ist eine Stufe vorhanden, an der Steckaufnahmen 65, 165 zur Aufnahme von Steckvorsprüngen 25, 125 der Energiespeicherschnittstellen 20, 120 angeordnet sind. Auf dem sozusagen höheren Niveau bzw. der Ebene 69 sind im Bereich des Vorsprunges 53 weitere Steckaufnahmen 66 vorgesehen, die in die Steckvorsprünge 26 der Energiespeicherschnittstellen 20, 120 eingreifen können. Die Steckvorsprünge 25, 125, 26 bilden beispielsweise Steckkonturen 46 zum Eingriff in Gegen-Steckkonturen 86, die durch die Steckaufnahmen 65,165, 66 bereitgestellt werden. Auch die Nuten 24 und die Führungsvorsprünge 23 können Steckkonturen 46 zum Eingriff in die Gegend-Steckkonturen 86 in Gestalt der Nuten 64 und der Führungsvorsprünge 63 bilden.

In den Steckaufnahmen 66 sind Kontaktelemente 77, 78, 79 zur Herstellung elektrischer Verbindungen mit Kontaktelementen 37, 38, 39 der Energiespeicherschnittstellen 20, 120. Die Kontaktelemente 77-79 umfassen beispielsweise Messerkontakte, die zwischen jeweils ein Paar von Kontaktelementen 37-37, 38-38, 39-39 der Energiespeicherschnittstelle 20, 120 eingreifen. Es versteht sich, dass aber auch nur ein jeweils einzelnes Kontaktelement 37-39 vorgesehen sein kann, das einseitig in Kontakt mit dem jeweils anderen Kontaktelement 77-79 gelangen kann.

Die Kontaktelemente 37-39 sowie 77-79 bilden Bestandteile einer Daten-Kontaktanordnung 70 über die elektrische Steuerdaten, beispielsweise im Rahmen eines I²C-Busses, übertragen werden können. Die Daten-Kontaktanordnung 70 stellt weiterhin beispielsweise ein Logik-Versorgungspotential für eine in der Zeichnung nicht dargestellte Steuerung 58 des Energiespeichers 50, 150 bereit. Über die Daten-Kontaktanordnung 70 kann die Steuerung 58 beispielsweise mit einer Steuerung 18 des Elektrogerätes 10, 110 kommunizieren, insbesondere für ein Lademanagement bzw. Entlademanagement von Batteriezellen 52 des Energiespeichers 50, 150.

Die Steckaufnahmen 65, 66 sind jeweils elektrisch isolierend, d.h. dass die in der einen Steckaufnahme 65, 66 angeordneten elektrischen Kontakte beispielsweise die in unterschiedlichen Steckaufnahmen 65 angeordneten Basiskontaktelemente 31, 32 sind jeweils elektrisch dadurch voneinander isoliert, dass sie in unterschiedlichen Steckaufnahmen 65 oder 165 angeordnet sind. Gleiches gilt sinngemäß auch für die Zusatzkontaktelemente 73, 74, die durch die Anordnung in einer jeweiligen Steckaufnahme 65, also einer elektrisch isolierenden Aufnahme 265, zusammen mit den jeweiligen Basiskontaktelementen 31 oder 32, elektrisch gegeneinander isoliert sind. Jeweils einem Potential P1 oder P2 zugeordneten Kontaktelemente sind also jeweils in einer Aufnahme 265, insbesondere einer Steckaufnahme 65, gegeneinander isoliert.

Auch die Steckvorsprünge 125 bilden eine elektrische Isolation für die dort angeordneten Gegenkontaktelemente. Beispielsweise sind in den Steckvorsprüngen 125 auch elektrisch isolierende Aufnahmen 266 vorgesehen, in denen beispielsweise jeweils mindestens ein Basiskontaktelement 131A, 131B, angeordnet sein kann.

Über die Batteriezellen 52 (es sind mehrere elektrisch entsprechend miteinander verschaltete Batteriezellen 52 vorhanden) kann der Energiespeicher 50, 150 das Elektrogerät 10, 110 mit elektrischer Versorgungsspannung versorgen, beispielsweise mit Potentialen P1 und P2. Das Potential P1 ist beispielsweise ein Massepotential, das Potential P2 ein Versorgungspotential mit beispielsweise 15V oder 18V oder auch einem anderen Gleichspannungspotential. Auf die Polarität der Potentiale P1 und P2 soll es im Weiteren nicht ankommen, sie könnte nämlich auch anders oder gerade umgekehrt sein. Wesentlich ist jedoch die Möglichkeit, dass vom Energiespeicher 50 zum Elektrogerät 10 ein hoher Stromfluss möglich ist.

Anschlussvorrichtungen 30, 130 der Elektrogeräte 10,110 weisen Basiskontaktelemente 31, 32 bzw. 131, 132 auf, die den Potentialen P1 und P2 zugeordnet sind und mit Basisgegenkontaktelementen 71, 72 Anschlussvorrichtungen 60, 160 der Energiespeicher 50, 150 in elektrischen Kontakt gelangen, wenn der Energiespeicher 50, 150 an das Elektrogerät 10, 110 angesteckt ist. Die Anschlussvorrichtungen 30, 60 sind Anschlussvorrichtungen eines ersten, neuartigen Typs, während die Anschlussvorrichtungen 130, 160 sozusagen konventionelle Anschlussvorrichtungen, nämlich Anschlussvorrichtungen eines zweiten Typs sind. Die Basiskontaktelemente 31, 32 bzw. 131, 132 bilden Bestandteile einer Anschlusskontaktanordnung 47. Die zugehörigen Gegenkontakte, die Basisgegenkontaktelemente 71, 72 sind Bestandteile einer Anschlusskontaktanordnung 87.

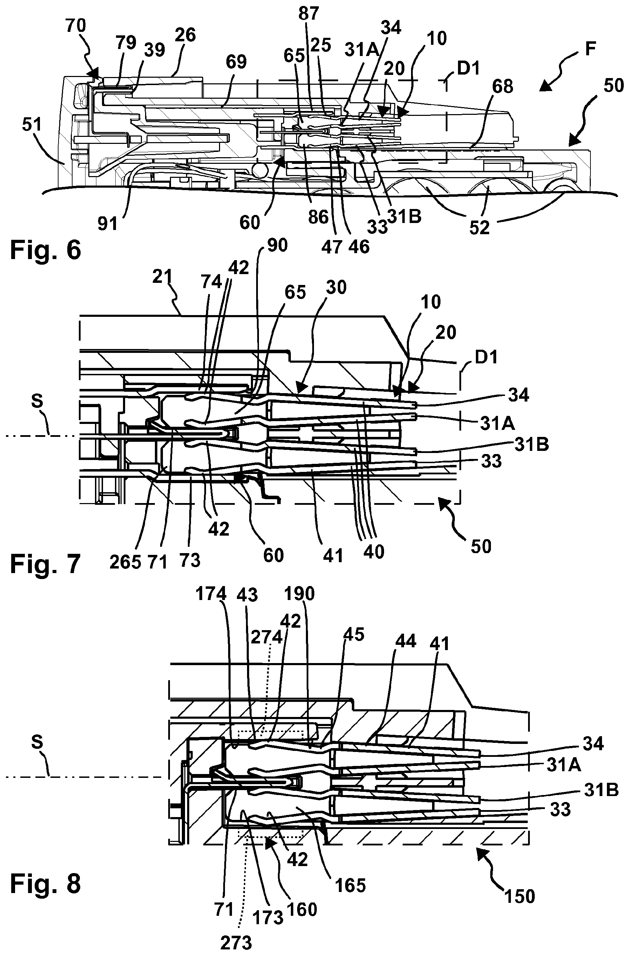

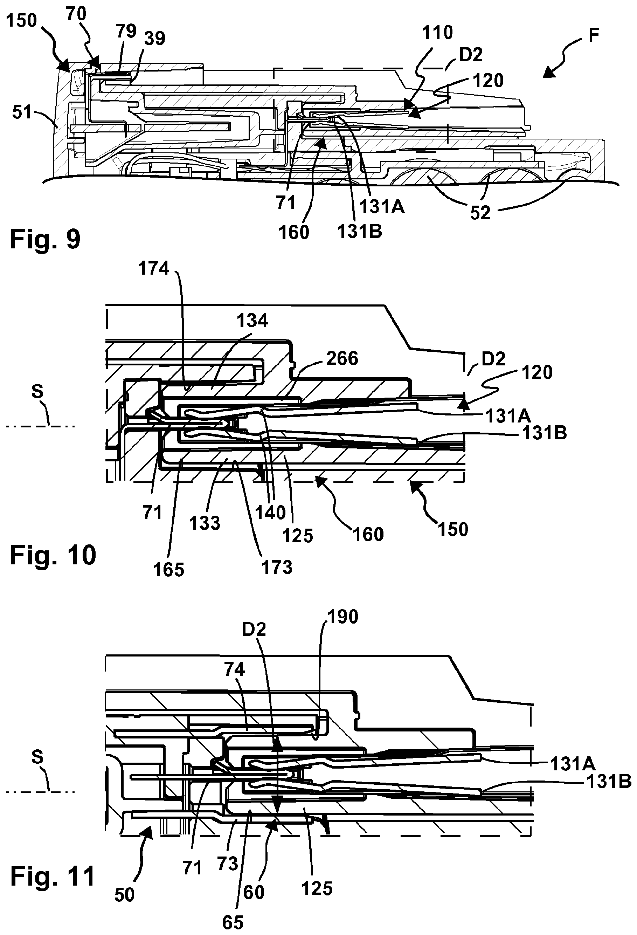

Die Basisgegenkontaktelemente 71, 72 sind bei den Anschlussvorrichtungen 60, 160 gleichartig ausgestaltet und bilden Messerkontakte bzw. Kontaktelemente, die zwischen jeweils ein Paar federnder Basiskontaktelemente 31A, 31B bzw. 131A, 131B eingreifen, was man in den Figuren 7, 8 sowie 10, 11 sehen kann. Sinngemäß gleich sind auch die Basiskontaktelemente 32, 132 aufgebaut, d.h. sie umfassen ebenfalls jeweils ein Paar einander gegenüberliegender, in der Zeichnung jedoch nicht einzelnen bezeichneter Kontaktelemente, zwischen die das Basisgegenkontaktelement 72 eingreifen kann.

Die Basiskontaktelemente 31, 32 umfassen jeweils mehrere Federzungen 40, die nebeneinander angeordnet sind und in Kontakt mit dem jeweiligen Basisgegenkontaktelement 71, 72 gelangen können. Zwischen den Federzungen 40, die sich entlang der Steckachse S erstrecken, sind Abstände vorhanden. Die Federzungen 40 sind relativ zueinander beweglich, so dass schon auf diesem Wege ein optimaler Kontakt zwischen den Basiskontaktelementen 31, 32 und den Basisgegenkontaktelementen 71, 72 hergestellt wird. Insbesondere ist diese Konfiguration gegenüber Vibrationen, die beim Betrieb des Elektrogerätes 10, 110 auftreten, wesentlich unempfindlicher als die Konfiguration mit jeweils einer einzelnen Federzunge 140, wie bei den Basiskontaktelementen 131A, 131B der Fall. Zwar können die Federzungen 140 voneinander entgegengesetzten Seiten her das Basisgegenkontaktelement 71 oder 72 klemmen. Es ist aber möglich, dass beim Betrieb des Elektrogerätes 10, 110 eine der Federzungen 140 abhebt, so dass der effektive, stromleitende Übertragungsquerschnitt vom Energiespeicher 150 zum Elektrogerät 10 oder 110 kleiner ist. Die sozusagen mehrteilige bzw. mehrere Federzungen 40 umfassende Anordnung beim Energiespeicher 50 bzw. dessen Anschlussvorrichtung 60 ist demgegenüber wesentlich unempfindlicher. Beispielsweise kann zwar eine Federzunge 40 von einer Seite des Basisgegenkontaktelementes 71, 72 abheben, während die daneben liegenden, die gleiche Seite kontaktierenden Federzungen 40 noch in Kontakt bleiben.

Eine zusätzliche, den Strom effektiv führenden oder leitenden Querschnitt bzw. die Kontaktfläche vergrößernde Maßnahme stellen Zusatzkontaktelemente 33, 34 der Anschlussvorrichtung 30 bereit, die in der Fixierstellung F, bei der der Energiespeicher 50 am Elektrogerät 10 befestigt ist, mit Zusatzgegenkontaktelementen 73, 74 der Anschlussvorrichtung 60 in Kontakt stehen. Die Zusatzgegenkontaktelement 73, 74 sind an Seitenwänden der Steckaufnahmen 65 vorgesehen. Zwischen den Zusatzgegenkontaktelementen 73, 74 sind die Basisgegenkontaktelement 71 oder 72 vorgesehen. Auch die Zusatzkontaktelemente 33, 34 sind als Federzungen 40 ausgestaltet, so dass insoweit ein Gleichteilprinzip gegeben ist.

Zugleich können diese Federzungen 40 bei den Steckaufnahmen 165 der Anschlussvorrichtung 160 federnd nachgiebig an Isolationsflächen 173, 174 oder 175, 176 entlang gleiten, die dort anstelle der Zusatzgegenkontaktelemente 73, 74, 75, 76 vorgesehen sind. Mithin können also die Zusatzkontaktelemente 73, 74 ohne eine elektrische Verbindung herzustellen, jedoch auch ohne zu stören, an die Anschlussvorrichtung 160 angesteckt werden. Es fließt in diesem Fall eben kein Strom über die Zusatzkontaktelemente 33, 34, sondern nur über die Basiskontaktelemente 31, 32. Man erkennt diese Kompatibilität beispielsweise in Figur 8. Die neue Anschlussvorrichtung 30 des Elektrogerätes 10 kann also mit einem sozusagen konventionellen Energiespeicher 150 gekoppelt werden, ohne dass funktionale Einschränkungen zu erwarten sind. Allenfalls der Stromfluss vom Energiespeicher 150 zum Elektrogerät 10 ist aufgrund der geringeren elektrischen Übertragungsquerschnitte kleiner.

Anstelle der Isolationsflächen 173,174 könnte aber ohne weiteres auch eine Vertiefung oder sonstige Aufnahmekavität vorgesehen sein, beispielsweise eine Aufnahmekavität 273, 274. Die Federzungen 40 würden dann frei und somit elektrisch isoliert in den Aufnahmekavität 273, 274 angeordnet sein, wenn die Anschlussvorrichtungen 30, 160 aneinander angesteckt sind

Varianten sind ohne weiteres möglich. Beispielsweise ist bei den Anschlussvorrichtungen 30, 60 vorgesehen, dass jedem der Potentiale P1 und P2 zusätzliche Kontakte zur Verfügung stehen. So kann beispielsweise auch beim Potential P2 noch eine Anordnung mit zwei Zusatzkontaktelementen 35, 36 vorgesehen sein, die in Kontakt mit Zusatzgegenkontaktelementen 75, 76 der Anschlussvorrichtung 60 gelangen können. Die Zusatzgegenkontaktelemente 75, 76 sind beispielsweise aneinander entgegengesetzten Seiten des Basisgegenkontaktelementes 72 in der jeweiligen Steckaufnahme 65 angeordnet. Ohne weiteres möglich wäre aber auch, nur eine Paarung von Zusatzkontaktelement und Zusatzgegenkontaktelement vorzusehen oder weitere derartige Paarungen, beispielsweise an weiteren Innenwänden der Steckaufnahmen 65. Beispielsweise kann nur eine Paarung von Zusatzkontaktelement 33 und Zusatzgegenkontaktelement 73 vorgesehen sein, während die andere Paarung von Zusatzkontaktelement 34 und Zusatzgegenkontaktelement 74 nicht unbedingt notwendig ist, um die Stromübertragungsfähigkeit zwischen Energiespeicher und Elektrogerät zu verbessern.

Aber auch eine Kompatibilität des Energiespeichers 150 mit beiden Anschlussvorrichtungen 30, 130 ist vorhanden:
Die Steckvorsprünge 125 der Anschlussvorrichtung 120, die in die Steckaufnahmen 165 der Anschlussvorrichtung 60 oder in die Steckaufnahmen 65 der Anschlussvorrichtung 60 eingreifen können, sind so ausgestaltet, dass sie an den Zusatzgegenkontaktelementen 73-76 entlang der Steckachse S vorbei geschoben werden können, um die Basiskontaktelemente 131A, 131B in elektrischen Kontakt mit dem Basisgegenkontaktelement 71 bzw. 72 zu bringen. Beispielsweise sind Steckabschnitte 133, 134, 135, 136 der Steckvorsprünge 125 anstelle der Zusatzkontaktelemente 33-36 bei der Anschlusskontaktanordnung 47 vorgesehen.

Die Steckabschnitte 133, 134 passen in einen Abstand D2 zwischen den Zusatzgegenkontaktelemente 73, 74 und den Gegenkontakt Elementen 71 oder 72.

Im Sinne der Kompatibilität der einzelnen Komponenten 10, 110, 50, 150 untereinander ist es, dass die Zusatzkontaktelemente 33-36 der Anschlusskontaktanordnung 47 in Bezug auf den Querschnitt der Steckvorsprünge 25 quer zur Steckachse S die gleiche Außenkontur definieren, wie die Steckabschnitte 133-136 der Steckvorsprünge 125. Mithin sind also die Steckvorsprünge 25, 125 im wesentlichen konturgleich oder exakt konturgleich quer zur Steckachse S.

Die Basiskontaktelemente 131 der Anschlussvorrichtung 130 sind geschützt zwischen den Steckvorsprüngen 133, 134 angeordnet. Bei der Anschlussvorrichtung 30 hingegen stehen die Basiskontaktelemente 31, 32 zur Bildung der Steckvorsprünge 25 vor einen Grundkörper bzw. den Grundkörper 21 vor. Weiterhin sind auch die Zusatzkontaktelemente 33, 34 (bzw. 35, 36) der Steckvorsprünge 25 frei stehend angeordnet.

Vorteilhaft ist es, wenn quer zur Steckachse S bei den Steckvorsprüngen 25 die jeweiligen Kontaktelemente schützende Seitenwände 48 vorgesehen sind. Die Seitenwände 48 können in die Steckaufnahmen 65 eintauchen. An dieser Stelle sei bemerkt, dass noch zusätzliche Kontaktelemente, mithin also Zusatzkontaktelemente, vorgesehen sein können. An den Steckaufnahmen 65 sind für diesen Fall weitere Kontaktflächen vorgesehen, die in Kontakt mit den sozusagen elektrisch leitenden Seitenwänden 48 gelangen können. Bei dieser Ausgestaltung würde man die Seitenwände 48 vorzugsweise als Federkontakte oder federnd ausgestalten. Alternativ könnte man auch die Innenwände der Steckaufnahmen 65 als Federkontakte zur federnden Anlage an den elektrisch leitenden Seitenwänden 48 ausgestalten.

Die Steckbewegung entlang der Steckachse S wird auch durch die Gestalt der Kontaktelemente 41, die durch die Federzungen 40 gebildet sind, erleichtert.

Die Kontaktelemente 41 weisen Kontaktvorsprünge 42 auf, die sich quer zur Steckachse S erstrecken und in Kontakt mit dem jeweiligen elektrischen Gegen-kontaktelement beispielsweise dem Basiskontaktelement 71, 72 oder einem der Zusatzgegenkontaktelemente 73-76 gelangen. Somit sind ausreichend große Kontaktflächen vorhanden. Die Kontaktvorsprünge 42 verringern jedoch den Reibungswiderstand bei der Verschiebebewegung entlang der Steckachse S.

Die Kontaktvorsprünge 72 sind bezüglich der Steckrichtung entlang der Steckachse S hinter Einführschrägen 43 angeordnet. Die Einführschrägen 43 haben ein Schrägverlauf schräg zur Steckachse S, so dass sie schlittenartig auf die jeweils gegenüberliegende Fläche, beispielsweise des Basisgegenkontaktelementes 71 oder des Zusatzgegenkontaktelementes 73 oder auch der Isolationsfläche 173 aufgleiten können.

Die Kontaktelemente 41 sind mit Halteabschnitten 44 am Grundkörper 21 festgelegt. Die Halteabschnitte 44 können beispielsweise auch als Steckvorsprünge dienen, die in entsprechende Steckaufnahmen des Grundkörpers 21 eingesteckt sind und dort zweckmäßigerweise verrastet, verklebt oder in anderweitiger Weise festgelegt sind. Zwischen den Halteabschnitten 44 und den Kontaktvorsprüngen 42 sind noch Federabschnitte 45 vorgesehen, die eine federnde Querbeweglichkeit der Kontaktvorsprünge 42 quer zur Steckachse S ermöglichen.

Auch die Steckaufnahmen 65, 165 weisen zweckmäßigerweise Einführschrägen 90, 190 auf, die insbesondere ein Aufgleiten bzw. Eingleiten der Zusatzkontaktelemente 33-36 erleichtern. Während die Einführschrägen 190 der Steckaufnahmen 165 unmittelbar durch das Grundmaterial des Grundkörpers oder Gehäuses 51 gebildet sind, sind die Einführschrägen 90 an den Stirnseiten der Zusatzgegenkontaktelemente 73-76 vorgesehen.

Selbstverständlich sind die jeweiligen Kontaktelemente eines jeweiligen Potentials vorteilhaft elektrisch miteinander verbunden. Exemplarisch ist in Figur 6 beispielsweise eine Anschlussleitung 91 dargestellt, die beispielsweise zu dem Potential P1 gehört und die Zusatzgegenkontaktelemente 74, 75 sowie das Basisgegenkontaktelement 71 elektrisch mit den Batteriezellen 51 verbindet.

Im Rahmen der vorliegenden Beschreibung wurden die dem Elektrogerät zugehörigen Kontaktelemente nur als "Kontaktelemente" bezeichnet, während die komplementären, passenden Kontaktelemente des Energiespeichers 50, 150 als Gegenkontaktelemente bezeichnet wurden. Diese Bezeichnung, die auch im allgemeinen Teil der Beschreibung verwendet wurde, soll das Verständnis der Erfindung erleichtern. Eine Anschlussvorrichtung gemäß der Erfindung kann jedoch beides enthalten, nämlich Kontaktelemente oder Gegenkontaktelemente. Das in der Zeichnung dargestellte Ausführungsbeispiel muss also so verstanden werden, dass auch die Gegenkontaktelemente des Energiespeichers 50 bzw. der Anschlussvorrichtung 60 "Kontaktelemente" im Sinne einer erfindungsgemäßen Anschlussvorrichtung bilden können. Dies wird insbesondere durch die Ausgestaltung der Anschlussvorrichtung 60 des Energiespeichers 50 deutlich.

Die Erfindung betrifft also zusammenfassend eine Anschlussvorrichtung zum elektrischen Anschluss eines Energiespeichers an ein einen elektrischen Antriebsmotor aufweisendes Elektrogerät, wobei die Anschlussvorrichtung ein Bestandteil des Energiespeichers oder des Elektrogeräts und an eine Anschlussvorrichtung des Elektrogeräts oder des Energiespeichers anschließbar ist, wobei die Anschlussvorrichtungen Steckkonturen und Gegen-Steckkonturen aufweisen, anhand derer der Energiespeicher an dem Elektrogerät in einer Fixierstellung formschlüssig fixiert ist, in der zur elektrischen Energieversorgung des Elektrogeräts durch den Energiespeicher mindestens zwei elektrische Verbindungen zwischen dem Elektrogerät und dem Energiespeicher mit unterschiedlichem Potential, insbesondere einem Massepotential und einer Versorgungsspannung, anhand jeweils eines Paares von miteinander in Kontakt stehenden Basiskontaktelementen und Basisgegenkontaktelementen der Anschlussvorrichtungen hergestellt sind. Die Anschlussvorrichtung weist zusätzlich zu mindestens einem Basiskontaktelement, das einem der Potentiale zugeordnet ist, mindestens ein neben dem Basiskontaktelement angeordnetes und vorteilhaft demselben Potential wie das mindestens eine Basiskontaktelement zugeordnetes Zusatzkontaktelement auf, das im an eine andere Anschlussvorrichtung eines ersten Typs angesteckten Zustand der Anschlussvorrichtung an einem Zusatzgegenkontaktelement der anderen Anschlussvorrichtung anliegt und im an eine andere Anschlussvorrichtung eines zweiten Typs angesteckten Zustand der Anschlussvorrichtung frei in einer Aufnahmekavität der anderen Anschlussvorrichtung steht oder an einer Isolationsfläche der anderen Anschlussvorrichtung anliegt.

## Patentansprüche

1. Erste Komponente mit einer ersten Anschlussvorrichtung (30, 60), wobei die erste Anschlussvorrichtung (30, 60) an eine zweite Anschlussvorrichtung (160, 60, 130, 30) einer zweiten Komponente anschließbar ist, wobei die erste Komponente ein Energiespeicher (50, 150) und die zweite Komponente ein einen elektrischen Antriebsmotor (12) aufweisendes Elektrogerät (10, 110), insbesondere eine Werkzeugmaschine oder ein Sauggerät, ist oder wobei die erste Komponente ein einen elektrischen Antriebsmotor (12) aufweisendes Elektrogerät (10, 110), insbesondere eine Werkzeugmaschine oder ein Sauggerät, ist und die zweite Komponente ein Energiespeicher (50, 150) ist, wobei die erste Anschlussvorrichtung (30, 60) und die zweite Anschlussvorrichtung (160, 60, 130, 30) zueinander formschlüssig passende Steckkonturen (46) und Gegen-Steckkonturen (86) aufweisen, anhand derer der Energiespeicher (50, 150) an dem Elektrogerät (10, 110) in einer Fixierstellung (F) formschlüssig fixierbar ist, wobei in der Fixierstellung (F) zur elektrischen Energieversorgung des Elektrogeräts (10, 110) durch den Energiespeicher (50, 150) mindestens zwei elektrische Verbindungen zwischen dem Elektrogerät (10, 110) und dem Energiespeicher (50, 150) mit unterschiedlichem Potential (P1, P2), insbesondere einem Massepotential und einer Versorgungsspannung, anhand jeweils eines Paares von miteinander in Kontakt stehenden Basiskontaktelementen (31, 32) einer Anschlusskontaktanordnung (47) der ersten Anschlussvorrichtung (30) und Basisgegenkontaktelementen (71, 72) einer Anschlusskontaktanordnung (87) der zweiten Anschlussvorrichtung (60) oder anhand jeweils eines Paares von miteinander in Kontakt stehenden Basisgegenkontaktelementen (71, 72) einer Anschlusskontaktanordnung (87) der ersten Anschlussvorrichtung (60) und Basiskontaktelementen (31, 32) einer Anschlusskontaktanordnung (47) der zweiten Anschlussvorrichtung (30) herstellbar sind,
wobei die erste Anschlussvorrichtung (30, 60) eine Anschlussvorrichtung (30, 60) eines ersten Typs bildet und zusätzlich zu mindestens einem Basiskontaktelement (31, 32) bzw. Basisgegenkontaktelement (71, 72), das einem der Potentiale (P1, P2) zugeordnet ist,
mindestens ein neben dem Basiskontaktelement (31, 32) angeordnetes und dem Potential (P1, P2) des Basiskontaktelementes (31, 32) zugeordnetes und mit dem Basiskontaktelement (31, 32) elektrisch verbundenes Zusatzkontaktelement (33, 34) aufweist
bzw. mindestens ein neben dem Basisgegenkontaktelement (71, 72) angeordnetes und dem Potential (P1, P2) des Basisgegenkontaktelements (71, 72) zugeordnetes und mit dem Basisgegenkontaktelement (71, 72) elektrisch verbundenes Zusatzgegenkontaktelement (73, 74) aufweist,
wobei das Zusatzkontaktelement (33, 34) bzw. Zusatzgegenkontaktelement (73, 74) im an eine zweite Anschlussvorrichtung (60, 30) eines ersten Typs angesteckten Zustand an einem von den Basisgegenkontaktelementen (71, 72) separaten Zusatzgegenkontaktelement (73, 74) bzw. an einem von den Basiskontaktelementen (31, 32) separaten Zusatzkontaktelement (33, 34) der zweiten Anschlussvorrichtung (60, 30) einen elektrischen Kontakt herstellend anliegen kann und im an eine zweite Anschlussvorrichtung (130, 160) eines zweiten Typs angesteckten Zustand der Anschlussvorrichtung (30, 60) keine elektrische Verbindung zwischen den Anschlussvorrichtungen (30, 60, 130, 160) herstellend frei in einer Aufnahmekavität (273, 274) der anderen Anschlussvorrichtung (130, 160) stehen kann oder an einer Isolationsfläche (173, 174) der zweiten Anschlussvorrichtung (130, 160) anliegen kann, **dadurch gekennzeichnet, dass**
die jeweils demselben elektrischen Potential (P1, P2) zugeordneten Basiskontaktelemente (31, 32) bzw. Basisgegenkontaktelemente (71, 72) der ersten Anschlussvorrichtung (30) gegenüber dem jeweils anderen elektrischen Potential (P2, P1) in einer elektrisch isolierenden Aufnahme (265, 266), insbesondere einer Steckaufnahme (65) oder einem Steckvorsprung (125), aufgenommen sind,
und in der jeweiligen elektrisch isolierenden Aufnahme (265, 266) das jeweilige Basiskontaktelement (31, 32) und das Zusatzkontaktelement (33, 34), die jeweils demselben elektrischen Potential (P1, P2) zugeordnet sind, bzw. das Basisgegenkontaktelement (71, 72) und das Zusatzgegenkontaktelement (73, 74) aufgenommen sind, die jeweils demselben elektrischen Potential (P1, P2) zugeordnet sind, und dass das Basiskontaktelement (31, 32) und/oder das Basisgegenkontaktelement (71, 72) in einem Abstand zu einem Innenumfang der elektrisch isolierenden Aufnahme (265, 266) und das Zusatzkontaktelement (33, 34) und/oder das Zusatzgegenkontaktelement (73, 74) am Innenumfang der elektrisch isolierenden Aufnahme (265, 266) angeordnet sind.

2. Erste Komponente mit einer ersten Anschlussvorrichtung (30) nach Anspruch 1, **dadurch gekennzeichnet, dass** im aneinander gesteckten Zustand der Anschlussvorrichtungen (30, 60) ein einem elektrischen Potential (P1, P2) zugeordnetes Basiskontaktelement (31, 32) und ein Basisgegenkontaktelement (71, 72) in der jeweiligen elektrisch isolierenden Aufnahme (265, 266) isoliert von Kontaktelementen anderer elektrischer Potentiale angeordnet sind.

3. Erste Komponente mit einer ersten Anschlussvorrichtung (30) nach einem der vorhergehenden Ansprüche, **dadurch gekennzeichnet, dass** bei der ersten Anschlussvorrichtung (30) vorgesehen ist, dass, insbesondere bei der Anschlussvorrichtung (30) des Energiespeichers (50), eine Steckaufnahme (65) angeordnet ist, in der mindestens ein Basisgegenkontaktelement (71, 72) und mindestens ein Zusatzgegenkontaktelement (73, 74) angeordnet sind, wobei zwischen dem mindestens einen Basisgegenkontaktelement (71, 72) und dem mindestens einen Zusatzgegenkontaktelement (73, 74) ein Abstand zur Aufnahme zumindest eines Abschnitts eines elektrisch isolierenden Steckvorsprungs (125) der anderen Anschlussvorrichtung (30, 60) vorhanden ist, und/oder dass ein jeweiliges Basiskontaktelement (31, 32) oder ein jeweiliges Basisgegenkontaktelement (71, 72) zentral in einer Steckaufnahme (65) oder einem Steckvorsprung (125) der Anschlussvorrichtung (30, 60) aufgenommen ist und/oder dass das mindestens eine Basiskontaktelement (31, 32) und/oder das mindestens eine Basisgegenkontaktelement (71, 72) und/oder das mindestens eine Zusatzkontaktelement (33, 34) und/oder das mindestens eine Zusatzgegenkontaktelement (73, 74) einen Federkontakt und/oder ein Federkontaktelement und/oder eine Kontaktzunge und/oder einander gegenüberliegende Kontaktelemente, insbesondere Messerkontakte, zum zangenartigen Umgreifen einer feststehenden Messer-Kontaktfläche umfasst oder dadurch gebildet ist.

4. Erste Komponente mit einer ersten Anschlussvorrichtung (30, 60) nach einem der vorhergehenden Ansprüche, **dadurch gekennzeichnet, dass** die erste Anschlussvorrichtung (30, 60) an die zweite Anschlussvorrichtung (30, 60) entlang einer Steckachse (S) oder Steckbahn ansteckbar ist und/oder dass die erste Anschlussvorrichtung (30, 60) mindestens zwei Kontaktelemente aufweist, die quer zu einer Steckachse, entlang derer die erste Anschlussvorrichtung an die zweite Anschlussvorrichtung ansteckbar ist, einander zugewandt und/oder federnd oder federbelastet sind.

5. Erste Komponente mit einer ersten Anschlussvorrichtung (30, 60) nach Anspruch 4, **dadurch gekennzeichnet, dass** die erste Anschlussvorrichtung (30, 60) zwei Kontaktelemente aufweist, die quer zu der Steckachse zum zangenartigen Umgreifen eines Kontaktelements der zweiten Anschlussvorrichtung einander zugewandt federnd oder federbelastet sind, und mindestens ein weiteres Kontaktelement aufweist, welches in einem Querabstand zu der Steckachse neben den Kontaktelementen angeordnet ist, wobei vorteilhaft vorgesehen ist, dass das mindestens eine weitere Kontaktelement feststehend ist oder quer zu der Steckachse von den beiden anderen Kontaktelementen abgewandt federnd oder federbelastet ist.

6. Erste Komponente mit einer ersten Anschlussvorrichtung (30, 60) nach einem der vorhergehenden Ansprüche, **dadurch gekennzeichnet, dass** die ersten und zweiten Anschlussvorrichtungen (30, 60) anhand einer Rasteinrichtung und/oder einer Klemmeinrichtung und/oder einer Verriegelungseinrichtung (55) aneinander fixierbar sind und/oder dass das mindestens eine Basiskontaktelement (31, 32) und/oder das mindestens eine Basisgegenkontaktelement (71, 72) und/oder das mindestens eine Zusatzkontaktelement (33, 34) und/oder das mindestens eine Zusatzgegenkontaktelement (73, 74) eine feststehende Kontaktfläche und/oder eine von einander gegenüberliegenden Gegenkontakten zangenartig umgreifbare Kontaktfläche umfasst oder dadurch gebildet ist, wobei vorteilhaft vorgesehen ist, dass die feststehende Kontaktfläche eine Wandfläche, insbesondere eine Innenwandfläche, einer Steckaufnahme oder eines Steckvorsprungs der Anschlussvorrichtung bildet, wobei die Anschlussvorrichtung eine Anschlussvorrichtung des ersten Typs ist.

7. Erste Komponente mit einer ersten Anschlussvorrichtung (30) nach einem der vorhergehenden Ansprüche, **dadurch gekennzeichnet, dass** eines von Basiskontaktelement (31, 32) und Basisgegenkontaktelement (71, 72) oder von Zusatzkontaktelement (33, 34) und Zusatzgegenkontaktelement (73, 74) eine feststehende Kontaktfläche umfasst, während das jeweils andere ein federndes Kontaktelement umfasst oder dadurch gebildet ist, wobei vorteilhaft vorgesehen ist, dass das federnde Kontaktelement quer zu der Steckachse (S) oder Steckbahn federnd nachgiebig ist und/oder die feststehende Kontaktfläche sich parallel oder im Wesentlichen parallel zu der Steckachse (S) oder Steckbahn erstreckt.

8. Erste Komponente mit einer ersten Anschlussvorrichtung (30, 60) nach einem der vorhergehenden Ansprüche, **dadurch gekennzeichnet, dass** bei der ersten Anschlussvorrichtung (30, 60) mindestens ein Kontaktelement, insbesondere das Basiskontaktelement (31, 32) oder Basisgegenkontaktelement (71, 72) und/oder das Zusatzkontaktelement (33, 34) oder das Zusatzgegenkontaktelement (73, 74), eine Einführschräge (43) zum Aufgleiten auf das jeweils andere Kontaktelement der zweiten Anschlussvorrichtung aufweist und/oder einen Kontaktvorsprung (42) aufweist, der quer zu der Steckbahn oder Steckachse (S) zum jeweils anderen Kontaktelement vorsteht, und/oder dass bei der ersten Anschlussvorrichtung (30, 60) eines von Basiskontaktelement (31, 32) und Basisgegenkontaktelement (71, 72) und/oder von Zusatzkontaktelement (33, 34) und Zusatzgegenkontaktelement (73, 74) quer zu der Steckachse (S) oder Steckbahn nebeneinander angeordnete und/oder relativ zueinander bewegliche Kontaktabschnitte, insbesondere Federkontakt-Zungen, aufweist.

9. Erste Komponente mit einer ersten Anschlussvorrichtung (30, 60) nach Anspruch 8, **dadurch gekennzeichnet, dass** bei der ersten Anschlussvorrichtung (30) vorgesehen ist, dass eines der Kontaktelemente in der Steckaufnahme (65) freistehend angeordnet ist und das andere Kontaktelement an einer Seitenwand der Steckaufnahme (65) angeordnet ist und/oder dass ein Abstand zwischen einem Basisgegenkontaktelement (71, 72) und einem Zusatzgegenkontaktelement (73, 74) zur Aufnahme eines Steckvorsprungs (125) oder eines Abschnitts eines Steckvorsprungs (125) vorgesehen ist, wobei in dem Steckvorsprung (125) mindestens ein Basiskontaktelement (131A, 131B) zur Herstellung eines elektrischen Kontakts mit dem Basisgegenkontaktelement (71, 72) angeordnet ist, wobei vorteilhaft vorgesehen ist, dass der Steckvorsprung (105 20) zumindest im Bereich des einen Basiskontaktelements (131A, 131B) elektrisch isolierend ist.

10. Erste Komponente mit einer ersten Anschlussvorrichtung (30, 60) nach einem der vorhergehenden Ansprüche, **dadurch gekennzeichnet, dass** bei der ersten Anschlussvorrichtung (30) vorgesehen ist, dass das Basiskontaktelement (31, 32) und das mindestens eine Zusatzkontaktelement (33, 34) oder das Basisgegenkontaktelement (71, 72) und das Zusatzgegenkontaktelement (73, 74) als vor eine feststehende Kontur der ersten Anschlussvorrichtung (30, 60) vorstehende Steckkontakte ausgestaltet sind und/oder dass das Basiskontaktelement (31, 32) und das mindestens eine Zusatzkontaktelement (33, 34) oder das Basisgegenkontaktelement (71, 72) und das Zusatzgegenkontaktelement (73, 74) neben mindestens einer, insbesondere das jeweilige Kontaktelement schützenden, vor die feststehende Kontur vorstehenden Seitenwand (48) angeordnet ist und/oder dass sie mindestens eine Daten-Kontaktanordnung (70) zur Herstellung einer Datenverbindung zwischen dem Elektrogerät (10, 110) und dem Energiespeicher (50, 150) aufweist, wobei Kontakte (37, 77) der Daten-Kontaktanordnung (70) separat von den Kontakten zur elektrischen Energieversorgung des Elektrogeräts (10, 110) durch den Energiespeicher (50, 150) sind.

11. Erste Komponente mit einer ersten Anschlussvorrichtung (30, 60) nach einem der vorhergehenden Ansprüche, **dadurch gekennzeichnet, dass** bei der ersten Anschlussvorrichtung (30) vorgesehen ist, dass die Anschlussvorrichtung (30) ausschließlich feststehende Kontaktelemente oder ausschließlich federnde Kontaktelemente und/oder ausschließlich Steckaufnahmen (65) für die Kontaktelemente der jeweils anderen Anschlussvorrichtung (30, 60) aufweist, wobei in den Steckaufnahmen (65) zweckmäßigerweise nicht nachgiebige und/oder feststehende Kontaktflächen vorgesehen sind, und/oder dass mindestens eines von Basiskontaktelement (31, 32) oder Basisgegenkontaktelement (71, 72) oder Zusatzkontaktelement (33, 34) oder Zusatzgegenkontaktelement (73, 74) ein an einem Grundkörper der Anschlussvorrichtung (30, 60) lösbar eingestecktes Bauteil bildet und/oder dass mindestens eine Paarung von Basiskontaktelement (31, 32) und Zusatzkontaktelement (33, 34) und/oder mindestens eine Paarung von Basisgegenkontaktelement (71, 72) und Zusatzgegenkontaktelement (73, 74) baugleiche Kontaktelemente umfasst und/oder dass mindestens eine Paarung von Basiskontaktelement (31, 32) und Zusatzkontaktelement (33, 34) und/oder mindestens eine Paarung von Basisgegenkontaktelement (71, 72) und Zusatzgegenkontaktelement (73, 74) in Bezug auf eine Steckachse (S), entlang derer die Anschlussvorrichtungen (30, 60) aneinander ansteckbar sind, keinen oder nur einen derart kleinen Längsabstand zueinander haben, dass sie mit den zugeordneten Kontaktelementen der jeweils anderen Anschlussvorrichtung beim Aneinanderstecken der Anschlussvorrichtungen (30, 60) im Wesentlichen gleichzeitig in elektrischen Kontakt gelangen.

## Claims

1. A first component comprising a first connection apparatus (30, 60), wherein the first connection apparatus (30, 60) is connectable to a second connection apparatus (160, 60, 130, 160) of a second component, wherein the first component comprises a stored energy source (50, 150) and the second component is an electrical device (10, 110) comprising an electric drive motor (12), in particular a machine tool or a vacuum cleaner, or wherein the first component is an electrical device (10, 110) comprising an electric drive motor (12), in particular a machine tool or a vacuum device, and the second component is a stored energy source (50, 150), wherein the first connection apparatus (30, 60) and the second connection apparatus (160, 60, 130, 30) comprise plug contours (46) and counter plug contours (86) interlockingly fitting one another, by means of which the stored energy source (50, 150) can be interlockingly fastened to the electrical device (10, 110) in a fastening position (F), wherein in the fastening position (F) for the electrical power supply of the electrical device (10, 110) by the stored energy source (50, 150), at least two electrical connections are established between the electrical device (10, 110) and the stored energy source (50, 150) with different potentials (P1, P2), in particular a ground potential and a supply voltage, are established by means of a respective pair of base contact elements (31, 32) of a connection contact assembly (47) of the first connection apparatus (30) and base counter contact elements (71, 72) of a connection contact assembly (87) of the second connection apparatus (60) or by means of a respective pair of base counter contact elements (71, 72) in contact with one another of a connection contact assembly (87) of the first connection apparatus (60) and base contact elements (31, 32) of a connection contact assembly (47) of the second connection apparatus (30),
wherein the first connection apparatus (30, 60) forms a connection apparatus (30, 60) of a first type and, in addition to at least one base contact element (31, 32) or base counter contact element (71, 72) assigned to one of the potentials (P1, P2), comprises at least one additional contact element (33, 34) arranged adjacent to the base contact element (31, 32), assigned to the potential (P1, P2) of the base contact element (31, 32), and electrically connected to the base contact element (31, 32)
or at least one additional counter contact element (73, 74) arranged adjacent to the base counter contact element (71, 72), assigned to the potential (P1, P2) of the base counter contact element (71, 72), and electrically connected to the base counter contact element (71, 72),
wherein the additional contact element (33, 34) or additional counter contact element (73, 74) can rest against an additional counter contact element (73, 74) separate from the base counter contact elements (71, 72) or against an additional contact element (33, 34) of the second connection apparatus (60, 30) and, when the connection apparatus (30, 60) is plugged into a second connection apparatus (130, 160) of a second type, no electrical connection is established between the connection apparatuses (30, 60, 130, 160) and can stand freely in a receiving cavity (273, 274) of the other connection apparatus (130, 160) or can abut against an insulating surface (173, 174) of the second connection apparatus (130, 160), **characterized in that** base contact elements (31, 32) respectively associated with the same electric potential (P1, P2) or base counter contact elements (71,72) of the first connection apparatus (30) are received in an electrically insulating receptacle (265, 266) opposite to the respective other electric potential (P2, P1), in particular a plug receptacle (65) or a plug projection (125) and in the respective electrically insulating receptacle (265, 266), the respective base contact element (31, 32) and the additional contact element (33, 34), which are each assigned to the same electrical potential (P1, P2), or the base counter contact element (71, 72) and the auxiliary counter contact element (73, 74) are received, which are each assigned to the same electrical potential (P1, P2), and that the base contact element (31, 32) and/or the base counter contact element (71, 72) are arranged at a distance from an inner circumference of the electrically insulating receptacle (265, 266) and the additional contact element (33, 34) and/or the additional counter contact element (73, 74) are arranged on the inner circumference of the electrically insulating receptacle (265, 266).

2. A first component with a first connection apparatus (30) according to claim 1, **characterized in that**, when the connection apparatuses (30, 60) are connected, a base contact element (31, 32) associated with an electric potential (P1, P2) and a base counter contact element (71, 72) are arranged in a respective electrically insulating receptacle (265, 266) insulated from contact elements of other electric potentials.

3. A first component with a first connection apparatus (30) according to one of the preceding claims, **characterized in that** the first connection apparatus (30) is configured such that, in particular in the connection apparatus (30) of the stored energy source (50), a plug receptacle (65) is arranged, in particular in the connection apparatus (30) of the stored energy source (50), in which at least one base counter contact element (71, 72) and at least one additional counter contact element (73, 74) are arranged, wherein there is a distance between the at least one base contact element (71, 72) and the at least one additional counter contact element (73, 74) for receiving at least a section of an electrically insulating plug projection (125) of the respective other connection apparatus (30, 60), and/or **in that** a respective base contact element (31, 32) or a respective base counter contact element (71, 72) is received centrally in a plug receptacle (65) or a plug projection (125) of the respective connection apparatus (30, 60), and/or **in that** the at least one base contact element (31, 32) and/or the at least one base counter contact element (71, 72) and/or the at least one additional contact element (33, 34) and/or at least one additional counter contact element (73, 74) comprises or is formed by a spring contact and/or a spring contact element and/or a contact strip and/or opposing contact elements, in particular blade contacts, for pincer-like gripping of a fixed blade contact surface.

4. A first component with a first connection apparatus (30, 60) according to one of the preceding claims, **characterized in that** the first connection apparatus (30, 60) can be connected to the respective other connection apparatus (30, 60) along a plug axis (S) or plug path, and/or **in that** the first connection apparatus (30, 60) comprises at least two contact elements facing each other and/or resilient or spring-loaded transverse to a plug axis, along which the connection apparatus can be connected to the respective other connection apparatus.

5. A first component with a first connection apparatus (30, 60) according to claim 4, **characterized in that** the first connection apparatus (30, 60) comprises two contact elements facing each other and/or resilient or spring-loaded transverse to the plug axis for pincer-like gripping of a contact element of the other connection apparatus, and it comprises at least one further contact element which is arranged in an interval transverse to the plug axis adjacent to the contact elements, wherein it is advantageously provided that the at least one further contact element is fixed or is transverse to the plug axis, resiliently or spring-loaded averted away from both of the other contact elements.

6. A first component with a first connection apparatus (30, 60) according to one of the preceding claims, **characterized in that** the connection apparatuses (30, 60) can be fixed to each other by means of a detent device and/or a clamping device and/or a locking device (55), and/or **in that** the at least one base contact element (31, 32) and/or the at least one base counter contact element (71, 72) and/or the at least one additional contact element (33, 34) and or the at least one additional counter contact element (73, 74) comprises or is formed by a fixed contact surface and/or a contact surface which can be grasped pincer-like by opposing counter contacts, wherein it is advantageously provided fixed contact surface forms a wall surface, in particular an inner wall surface, a plug receptacle or a plug projection of the connection apparatus, wherein the connection apparatus is a connection apparatus of the first type.

7. A first component with a first connection apparatus (30) according to one of the preceding claims, **characterized in that** one base contact element (31, 32) and base counter contact element (71, 72) or one additional contact element (33, 34) and additional counter contact element (73, 74) comprises a fixed contact surface while the other one comprises or is formed by a resilient contact element, wherein it is advantageously provided that the resilient contact element is resiliently transverse to the plug axis (S) or plug path and/or the fixed contact surface extends parallel or substantially parallel to the plug axis (S) or plug path.

8. A first component comprising a first connection apparatus (30, 60) according to any of the preceding claims, **characterized in that**, in the first connection apparatus (30, 60), at least one contact element, in particular the base contact element (31, 32) or base counter contact element (71, 72) and/or the additional contact element (33, 34) or the additional counter contact element (73, 74) has an insertion slope (43) for sliding onto the respective other contact element and/or a contact projection (42) which projects transverse to the plug path or plug axis (S) to the respective other contact element, and/or that in the first connection apparatus (30, 60), one of the base contact element (31, 32) and base counter contact element (71, 72) and/or one of the additional contact element (33, 34) and additional counter contact element (73, 74) has contact sections arranged transverse to the plug axis (S) or plug path adjacent to each other and/or movable relative to each other, in particular spring contact tongues.

9. A first component with a first connection apparatus (30, 60) according to claim 8, **characterized in that** the first connection apparatus (30) is configured such that one of the contact elements is arranged free-standing in the plug receptacle (65) and the other contact element is arranged on a side wall of the plug receptacle (65) and/or that an interval is provided between a base counter contact element (71, 72) and an additional counter contact element (73, 74) for receiving a plug projection (125) or a section of a plug projection (125), wherein at least one base contact element (131A, 131B) is arranged in the plug projection (125) for establishing electrical contact with the base counter contact element (71, 72), wherein it is advantageously provided that the plug projection (105 20) is electrically insulating at least in the region of a base contact element (131A, 131B).

10. A first component comprising a first connection apparatus (30, 60) according to one of the preceding claims, **characterized in that** the first connection apparatus (30) is configured such that the base contact element (31, 32) and the at least one additional contact element (33, 34) or the base counter contact element (71, 72) and the additional counter contact element (73, 74) are configured as plug contacts protruding in front of a fixed contour of the respective connection apparatus (30, 60) and/or that the base contact element (31, 32) and the at least one additional contact element (33, 34) or the base counter contact element (71, 72) and the additional counter contact element (73, 74) is arranged adjacent to at least one side wall (48), in particular protecting the respective contact element, projecting in front of the fixed contour, and/or it comprises at least one data contact assembly (70) for establishing a data connection between the electrical device (10, 110) and the stored energy source (50, 150), wherein contacts (37, 77) of the data contact assembly (70) are separate from the contacts for supplying electrical energy to the electrical device (10, 110) by the stored energy source (50, 150).

11. A first component with a first connection apparatus (30, 60) according to one of the preceding claims, **characterized in that** the first connection apparatus (30) is designed such that the connection apparatus (30) has exclusively fixed contact elements or exclusively resilient contact elements and/or exclusively plug receptacles (65) for the contact elements of the respective other connection apparatus (30, 60), wherein non yielding and/or fixed contact surfaces are expediently provided in the plug receptacles (65), and/or that at least one of a base contact element (31, 32) or a base counter contact element (71, 72) or an additional contact element (33, 34) or an additional counter contact element (73, 74) forms a component releasably connected to a main body of the respective connection apparatus (30, 60), and/or that at least one pairing of base contact element (31, 32) and additional contact element (33, 34) and/or at least one pairing of base counter contact element (71, 72) and additional counter contact element (73, 74) comprises structurally identical contact elements, and/or that at least one pairing of base contact element (31, 32) and additional contact element (33, 34) and/or at least one pairing of base counter contact element (71, 72) and additional counter contact element (73, 74) have no longitudinal distance from each other with respect to a plug axis (S), along which the connection apparatuses (30, 60) are connected to each other, or only such a small longitudinal distance from each other that they are in electrical contact with the associated contact elements of the respective other connection apparatus essentially simultaneously when the connection apparatuses (30, 60) are connected together.

## Revendications

1. Premier composant comprenant un premier dispositif de raccordement (30, 60), le premier dispositif de raccordement (30, 60) pouvant être raccordé à un deuxième dispositif de raccordement (160, 60, 130, 30) d'un deuxième composant, le premier composant étant un accumulateur d'énergie (50, 150) et le deuxième composant étant un appareil électrique (10, 110) qui possède un moteur d'entraînement électrique (12), notamment une machine-outil ou un aspirateur, ou le premier composant étant un appareil électrique (10, 110) qui possède un moteur d'entraînement électrique (12), notamment une machine-outil ou un aspirateur, et le deuxième composant étant un accumulateur d'énergie (50, 150), le premier dispositif de raccordement (30, 60) et le deuxième dispositif de raccordement (160, 60, 130, 30) présentant des profils d'enfichage (46) et des profils d'enfichage homologues (86) adaptés les uns aux autres par complémentarité de formes, à l'aide desquels l'accumulateur d'énergie (50, 150) peut être calé par complémentarité de formes contre l'appareil électrique (10, 110) dans une position de calage (F), au moins deux connexions électriques pouvant, dans la position de calage (F), en vue de l'alimentation en énergie électrique de l'appareil électrique (10, 110) par l'accumulateur d'énergie (50, 150), être établies entre l'appareil électrique (10, 110) et l'accumulateur d'énergie (50, 150) avec des potentiels (P1, P2) différents, notamment un potentiel de masse et une tension d'alimentation, respectivement à l'aide d'une paire d'éléments de contact de base (31, 32) en contact les uns avec les autres, d'un arrangement de contacts de raccordement (47) du premier dispositif de raccordement (30) et d'éléments de contact homologues de base (71, 72) d'un arrangement de contacts de raccordement (87) du deuxième dispositif de raccordement (60), ou respectivement à l'aide d'une paire d'éléments de contact homologues de base (71, 72) en contact les uns avec les autres d'un arrangement de contacts de raccordement (87) du premier dispositif de raccordement (60) et d'éléments de contact de base (31, 32) d'un arrangement de contacts de raccordement (47) du deuxième dispositif de raccordement (30),
le premier dispositif de raccordement (30, 60) formant un dispositif de raccordement (30, 60) d'un premier type et, en plus d'au moins un élément de contact de base (31, 32) ou élément de contact homologue de base (71, 72) qui est associé à l'un des potentiels (P1, P2),
possédant au moins un élément de contact supplémentaire (33, 34), disposé à côté de l'élément de contact de base (31, 32) et associé au potentiel (P1, P2) de l'élément de contact de base (31, 32) et relié électriquement à l'élément de contact de base (31, 32)
possédant au moins un élément de contact homologue supplémentaire (73, 74), disposé à côté de l'élément de contact homologue de base (71, 72) et associé au potentiel (P1, P2) de l'élément de contact homologue de base (71, 72) et relié électriquement à l'élément de contact homologue de base (71, 72),
l'élément de contact supplémentaire (33, 34) ou l'élément de contact homologue supplémentaire (73, 74), dans un état enfiché sur un deuxième dispositif de raccordement (60, 30) d'un premier type, pouvant reposer avec établissement d'un contact électrique contre un élément de contact homologue supplémentaire (73, 74) séparé des éléments de contact homologue de base (71, 72) ou contre un élément de contact supplémentaire (33, 34) séparé des éléments de contact de base (31, 32) du deuxième dispositif de raccordement (60, 30) et, dans un état enfiché sur un deuxième dispositif de raccordement (130, 160) d'un deuxième type du deuxième dispositif de raccordement (30, 60), peut se trouver librement dans une cavité de réception (273, 274) de l'autre dispositif de raccordement (130, 160) ou peut reposer contre une surface d'isolation (173, 174) du deuxième dispositif de raccordement (130, 160) sans établir de connexion électrique entre les dispositifs de raccordement (30, 60, 130, 160), **caractérisé en ce que**
les éléments de contact de base (31, 32) ou les éléments de contact homologues de base (71, 72) du premier dispositif de raccordement (30), respectivement associés au même potentiel électrique (P1, P2), sont accueillis dans un logement (265, 266) électriquement isolant par rapport à l'autre potentiel électrique (P2, P1) respectif, en particulier un logement d'enfichage (65) ou une partie saillante d'enfichage (125), et l'élément de contact de base (31, 32) respectif et l'élément de contact supplémentaire (33, 34), qui sont respectivement associés au même potentiel électrique (P1, P2), ou l'élément de contact homologue de base (71, 72) et l'élément de contact homologue supplémentaire (73, 74), qui sont respectivement associés au même potentiel électrique (P1, P2), sont inclus dans le logement électriquement isolant (265, 266) respectif, et **en ce que** l'élément de contact de base (31, 32) et/ou l'élément de -contact homologue de base (71, 72) sont disposés à une distance donnée par rapport à une circonférence intérieure du logement électriquement isolant (265, 266) et l'élément de contact supplémentaire (33, 34) et/ou de l'élément de contact homologue supplémentaire (73, 74) sur la circonférence intérieure du logement électriquement isolant (265, 266).

2. Premier composant comprenant un premier dispositif de raccordement (30) selon la revendication 1, **caractérisé en ce que** dans l'état enfiché l'un à l'autre des dispositifs de raccordement (30, 60), un élément de contact de base (31, 32) associé à un potentiel électrique (P1, P2) et un élément de contact homologue de base (71, 72) sont disposés dans le logement électriquement isolant (265, 266) respectif en étant isolés des éléments de contact d'autres potentiels électriques.

3. Premier composant comprenant un premier dispositif de raccordement (30) selon l'une des revendications précédentes, **caractérisé en ce qu'**il est prévu, pour le premier dispositif de raccordement (30), notamment pour le dispositif de raccordement (30) de l'accumulateur d'énergie (50), un logement d'enfichage (65) dans lequel sont disposés au moins un élément de contact homologue de base (71, 72) et au moins un élément de contact homologue supplémentaire (73, 74), un écart servant à accueillir au moins une portion d'une partie saillante d'enfichage (125) électriquement isolante de l'autre dispositif de raccordement (30, 60) étant présent entre l'au moins un élément de contact homologue de base (71, 72) et l'au moins un élément de contact homologue supplémentaire (73, 74) et/ou **en ce qu'**un élément de contact de base (31, 32) respectif ou un élément de contact homologue de base (71, 72) respectif est logé de manière centralisée dans un logement d'enfichage (65) ou une partie saillante d'enfichage (125) du dispositif de raccordement (30, 60) et/ou **en ce que** l'au moins un élément de contact de base (31, 32) et/ou l'au moins un élément de contact homologue de base (71, 72) et/ou l'au moins un élément de contact supplémentaire (33, 34) et/ou l'au moins un élément de contact homologue supplémentaire (73, 74) comporte un contact à ressort et/ou un élément de contact à ressort et/ou une languette de contact et/ou des éléments de contact situés les uns en face des autres, en particulier des contacts à lame, destinés à entourer à la manière d'une pince une surface de contact à lame fixe, ou est ainsi formé.

4. Premier composant comprenant un premier dispositif de raccordement (30, 60) selon l'une des revendications précédentes, **caractérisé en ce que** le premier dispositif de raccordement (30, 60) peut être enfiché au deuxième dispositif de raccordement (30, 60) le long d'un axe d'enfichage (S) ou d'une voie d'enfichage et/ou **en ce que** le premier dispositif de raccordement (30, 60) possède au moins deux éléments de contact, qui se font face l'un à l'autre transversalement par rapport à un axe d'enfichage le long duquel le premier dispositif de raccordement peut être enfiché au deuxième dispositif de raccordement et/ou sont élastiques ou montés sur ressort.

5. Premier composant comprenant un premier dispositif de raccordement (30, 60) selon la revendication 4, **caractérisé en ce que** le premier dispositif de raccordement (30, 60) possède deux éléments de contact, qui sont élastiques ou montés sur ressort en se faisant face l'un à l'autre transversalement par rapport à l'axe d'enfichage pour entourer à la manière d'une pince un élément de contact du deuxième dispositif de raccordement, et au moins un élément de contact supplémentaire, lequel est disposé à une distance latérale par rapport à l'axe d'enfichage à côté des éléments de contact, en prévoyant avantageusement qu'au moins un élément de contact supplémentaire est fixe ou est élastique ou monté sur ressort transversalement par rapport à l'axe d'enfichage en étant détourné des deux autres éléments de contact.

6. Premier composant comprenant un premier dispositif de raccordement (30, 60) selon l'une des revendications précédentes, **caractérisé en ce que** les premier et deuxième dispositifs de raccordement (30, 60) peuvent être calés les uns aux autres à l'aide d'un système d'encliquetage et/ou d'un système de serrage et/ou d'un système de verrouillage (55) et/ou **en ce que** l'au moins un élément de contact de base (31, 32) et/ou l'au moins un élément de contact homologue de base (71, 72) et/ou l'au moins un élément de contact supplémentaire (33, 34) et/ou l'au moins un élément de contact homologue supplémentaire (73, 74) comporte une surface de contact fixe et/ou une surface de contact pouvant être entourée à la manière d'une pince par des contacts homologues situés les uns en face des autres, en prévoyant avantageusement que la surface de contact fixe forme une surface de paroi, en particulier une surface de paroi intérieure, d'un logement d'enfichage ou d'une partie saillante d'enfichage du dispositif de raccordement, le dispositif de raccordement étant un dispositif de raccordement du premier type.

7. Premier composant comprenant un premier dispositif de raccordement (30) selon l'une des revendications précédentes, **caractérisé en ce que** l'un parmi l'élément de contact de base (31, 32) et l'élément de contact homologue de base (71, 72) ou parmi l'élément de contact supplémentaire (33, 34) et l'élément de contact homologue supplémentaire (73, 74) comporte une surface de contact fixe, alors que l'autre respectif comporte un élément de contact élastique ou est ainsi formé, en prévoyant avantageusement que l'élément de contact élastique est flexible élastiquement transversalement par rapport à l'axe d'enfichage (S) ou à la voie d'enfichage et/ou la surface de contact fixe s'étend parallèlement ou sensiblement parallèlement à l'axe d'enfichage (S) ou à la voie d'enfichage.

8. Premier composant comprenant un premier dispositif de raccordement (30, 60) selon l'une des revendications précédentes, **caractérisé en ce que**, pour le premier dispositif de raccordement (30, 60), au moins un élément de contact, en particulier l'élément de contact de base (31, 32) ou l'élément de contact homologue de base (71, 72) et/ou l'élément de contact supplémentaire (33, 34) ou l'élément de contact homologue supplémentaire (73, 74) possède un chanfrein d'insertion (43) destiné à glisser sur l'autre élément de contact respectif du deuxième dispositif de raccordement et/ou possède une partie saillante de contact (42), qui fait saillie transversalement à la voie d'enfichage ou à l'axe d'enfichage (S) vers l'autre élément de contact respectif et/ou **en ce que**, pour le premier dispositif de raccordement (30, 60), l'un parmi l'élément de contact de base (31, 32) et l'élément de contact homologue de base (71, 72) et/ou l' élément de contact supplémentaire (33, 34) et l'élément de contact homologue supplémentaire (73, 74) possède des portions de contact disposées les unes à côté des autres et/ou mobiles les uns par rapport aux autres transversalement par rapport à la voie d'enfichage ou à l'axe d'enfichage, notamment des languettes de contact à ressort.

9. Premier composant comprenant un premier dispositif de raccordement (30, 60) selon la revendication 8, **caractérisé en ce que**, pour le premier dispositif de raccordement (30), il est prévu que l'un des éléments de contact soit disposé de manière isolée dans le logement d'enfichage (65) et que l'autre élément de contact soit disposé au niveau d'une paroi latérale du logement d'enfichage (65) et/ou **en ce qu'**un écart est prévu entre un élément de contact homologue de base (71, 72) et un élément de contact homologue supplémentaire (73, 74) pour accueillir une partie saillante d'enfichage (125) ou une portion d'une partie saillante d'enfichage (125), au moins un élément de contact de base (131A, 131B) destiné à établir un contact électrique avec l'élément de contact homologue de base (71, 72) étant disposé dans la partie saillante d'enfichage (125), en prévoyant avantageusement que la partie saillante d'enfichage (105 20) soit électriquement isolant au moins dans la zone dudit élément de contact de base (131A, 131B).

10. Premier composant comprenant un premier dispositif de raccordement (30, 60) selon l'une des revendications précédentes, **caractérisé en ce que**, pour le premier dispositif de raccordement (30), il est prévu que l'élément de contact de base (31, 32) et l'au moins un élément de contact supplémentaire (33, 34) ou l'élément de contact homologue de base (71, 72) et l'élément de contact homologue supplémentaire (73, 74) sont configurés comme des contacts à enficher en saillie devant un contour fixe du premier dispositif de raccordement (30, 60) et/ou **en ce que** l'élément de contact de base (31, 32) et l'au moins un élément de contact supplémentaire (33, 34) ou l'élément de contact homologue de base (71, 72) et l'élément de contact homologue supplémentaire (73, 74) sont disposés à côté d'au moins une paroi latérale (48) en saillie devant le contour fixe et protégeant l'élément de contact respectif et/ou **en ce qu'**il possède au moins un arrangement de contacts de données (70) destiné à établir une connexion de données entre l'appareil électrique (10, 110) et l'accumulateur d'énergie (50, 150), les contacts (37, 77) de l'arrangement de contacts de données (70) étant séparés des contacts servant à l'alimentation en énergie de l'appareil électrique (10, 110) par l'accumulateur d'énergie (50, 150).

11. Premier composant comprenant un premier dispositif de raccordement (30, 60) selon l'une des revendications précédentes, **caractérisé en ce que**, pour le premier dispositif de raccordement (30), il est prévu que le dispositif de raccordement (30) possède exclusivement des éléments de contact fixes ou exclusivement des éléments de contact élastiques et/ou exclusivement des logements d'enfichage (65) pour les éléments de contact de l'autre dispositif de raccordement (30, 60) respectif, des surfaces de contact qui sont, de manière appropriée, non souples et/ou fixes étant prévues dans les logements d'enfichage (65), et/ou **en ce qu'**au moins l'un parmi l'élément de contact de base (31, 32) ou l'élément de contact homologue de base (71, 72) ou l'élément de contact supplémentaire (33, 34) ou élément de contact homologue supplémentaire (73, 74) forme un composant enfiché de manière amovible sur un corps de base du dispositif de raccordement (30, 60) et/ou **en ce qu'**au moins une paire formée de l'élément de contact de base (31, 32) et de l'élément de contact supplémentaire (33, 34) et/ou au moins une paire formée de l'élément de contact homologue de base (71, 72) et de l'élément de contact homologue supplémentaire (73, 74) comprend des éléments de contact de construction identique et/ou **en ce qu'**au moins une paire formée de l'élément de contact de base (31, 32) et de l'élément de contact supplémentaire (33, 34) et/ou au moins une paire formée de l'élément de contact homologue de base (71, 72) et de l'élément de contact homologue supplémentaire (73, 74) présentent entre eux, en référence à un axe d'enfichage (S) le long duquel les dispositifs de raccordement (30, 60) peuvent être enfichés l'un à l'autre, un écart longitudinal nul ou seulement faible, de sorte qu'ils entrent en contact électrique sensiblement simultanément avec les éléments de contact associés de l'autre dispositif de raccordement respectif lors de l'enfichage mutuel des dispositifs de raccordement (30, 60).
